# EUROPEAN PATENT APPLICATION

(11) **EP 2 187 674 A1**
(43) Date of publication of application: **19.05.2010**
(21) Application number: 08828745.3
(22) Date of filing: 29.08.2008
(51) Int. Cl.: H04W 4/00

(54) **MOBILE COMMUNICATION SYSTEM, WIRELESS COMMUNICATION METHOD, CORE NETWORK, MOBILE TERMINAL APPARATUS AND PROGRAM**

(30) Priority: 29.08.2007 JP 2007222958
(71) Applicant: Sharp Kabushiki Kaisha, Osaka-shi, Osaka 545-8522 (JP)
(72) Inventor: KUMAI, Hisao c/o Sharp Kabushiki Kaisha, Osaka 545-8522 (JP); ARAMOTO, Masafumi c/o Sharp Kabushiki Kaisha, Osaka 545-8522 (JP); MORIWAKI, Tetsuro c/o Sharp Kabushiki Kaisha, Osaka 545-8522 (JP); SUGAYAMA, Toru c/o Sharp Kabushiki Kaisha, Osaka 545-8522 (JP); YAMADA, Shohei c/o Sharp Kabushiki Kaisha, Osaka 545-8522 (JP)
(74) Representative: Müller - Hoffmann & Partner
(86) International application number: PCT/JP2008/065563
(87) International publication number: WO 2009/028673

(57) **Abstract**

A core network includes an external network reception section which receives data from an external network, a connection instruction processing section which transmits a paging request directed to user equipment upon receipt of the data and also transmits a connection instruction of a second radio communication type, a connection management section which registers a connection by the second radio communication type upon receipt of a connection request, and a transmission section which transmits the data. The user equipment includes a first radio communication type communication section which receives the paging request and receives the connection instruction, a second radio communication type connection section which uses the second radio communication type to transmit the connection request according to the received connection instruction and causes the communication state to transition to a reception enabled state, and a second radio communication type communication section which receives the data when the communication state of the second communication type is the reception enabled state. This makes it possible to provide the user equipment of an idle state with communication data using a radio communication type having no paging function.

## Description

The present invention relates to a mobile communication system, a radio communication method, a core network, user equipment, and a program.
The present application claims priority to Japanese Patent Application JP 2007-222958 filed in the Japanese Patent Office on August 29, 2007, the entire contents of which being incorporated herein by reference.

### BACKGROUND ART

In a UMTS (Universal Mobile Telecommunications System) which is being standardized as a third-generation mobile communication network, a location management function for tracking a location of User Equipment (UE) or a paging (calling) function for calling the user equipment when an incoming call directed to the user equipment exists is provided as a mobility management function of the user equipment. When the user equipment is turned on, the user equipment is connected to a radio access network (UTRAN: UMTS Terrestrial Radio Access Network) and is registered (attached) to the radio access network (UTRAN) in an idle state (idle mode) in which the provision of service is received. When the user equipment is registered to the radio access network (OUTRAN), that is, the mobile communication network (UMTS), the location of the user equipment is managed by constantly reporting location information from the user equipment to the network side.

The mobile communication network (UMTS) performs a paging (calling) operation for requesting a corresponding area (paging area: PA) where the user equipment is registered to set up a bearer or a radio transmission path by referring to registered location information of the user equipment so as to deliver a packet to the user equipment of the idle state in a state in which the session of a packet communication service directed to the user equipment has not started, that is, in a state in which a bearer (path for transmitting communication information) is not established within the mobile communication network (UMTS) when a packet destined for the user equipment registered to the mobile communication network (UMTS) has been received. A paging message is broadcast (reported) to a base station within the paging area (PA), the destination user equipment returns a response message to the call, and the user equipment is changed from the idle state to a reception enabled state (see Non-Patent Document 1 and Non-Patent Document 2).

As a next-generation mobile communication system, LTE (Long Term Evolution) & SAE (System Architecture Evolution) which are being standardized by 3GPP define a communication system accommodating a radio access network (Wireless Local Area Network: WLAN, Worldwide Interoperability for Microwave Access: WiMAX, or the like) of a non-cellular system as well as a mobile communication network of related art, and consider a control operation by a gateway device and a network device within the communication system, so that a packet sent to the user equipment may be delivered to a plurality of radio access networks (see Non-Patent Document 3, Non-Patent Document 4, and Non-Patent Document 5).
Non-Patent Document 1: TS 24.008 Mobile radio interface Layer 3 specification; Core network protocols; Stage 3
Non-Patent Document 2: TS 23.060 General Packet Radio Service (GPRS); Service description; Stage 2
Non-Patent Document 3: TR 23.882 3GPP system architecture evolution (SAE): Report on technical options and conclusions
Non-Patent Document 4: TS 23.401 3GPP System Architecture Evolution: GPRS enhancements for LTE access
Non-Patent Document 5: TS 23.402 3GPP System Architecture Evolution: Architecture Enhancements for non-3GPP accesses

### DISCLOSURE OF INVENTION

### Problem to be Solved by the Invention

However, a service may be provided by establishing a connection upon communication and releasing the connection at a non-communication time by a manual operation of a user without a function corresponding to a paging function in a radio communication type of a radio access network of a non-cellular system other than the mobile communication network of related art. There is a problem in that user equipment has to use a radio access type having a paging function in the idle state even though communication data is suitable for a radio communication type having no paging function in terms of the quality of service or the like when the communication data is transmitted from the network side to the user equipment corresponding to a plurality of radio communication types including a radio communication type having no paging function and a radio communication type having a paging function.
A problem to be solved is to make it possible to provide user equipment of an idle state with communication data using a radio communication type having no paging function.

### Means for Solving the Problem

(1) According to a mobile communication system of the present invention, there is provided a mobile communication system having at least one user equipment communicating using a plurality of radio communication types including one or more radio communication types having a paging function of causing a communication state of a corresponding radio communication type to transition from an idle state to a reception enabled state when a paging request is received, at least one core network communicating with an external network, and at least one radio access network communicating with the user equipment using a corresponding radio communication type in each of the plurality of radio communication types. The mobile communication system includes the core network including: an external network reception section which receives data transmitted from the external network to the user equipment; a connection instruction processing section which causes a first radio access network communicating using a first radio communication type to transmit a paging request directed to the user equipment using the first radio communication type having the paging function as one of the plurality of radio communication types and a connection instruction of a second radio communication type other than the first radio communication type as one of the plurality of radio communication types when the external network reception section receives the data; a connection management section which registers a connection by the second radio communication type with the user equipment when a second radio access network communicating using the second radio communication type receives a connection request from the user equipment; and a transmission section which causes the second radio access network to transmit the data when the connection management section registers the connection by the second radio communication type with the user equipment; and the user equipment including: a first radio communication type communication section which receives the paging request to cause a communication state of the first radio communication type to transition to the reception enabled state and receives the connection instruction; a second radio communication type connection section which transmits the connection request using the second radio communication type designated by the connection instruction according to the received connection instruction and causes a communication state of the second communication type to transition to the reception enabled state; and a second radio communication type communication section which receives the data using the second radio communication type when the communication state of the second communication type is the reception enabled state.

(2) The mobile communication system of the present invention is **characterized in that:** the core network includes a buffer section which stores the received data, the external network reception section of the core network stores the received data in the buffer section, and the transmission section of the core network causes the second radio access network to transmit the data read from the buffer section when the connection by the second radio communication type with the user equipment is registered to the connection management section.

(3) The mobile communication system of the present invention is **characterized in that:** the core network includes: an external gateway device connected to the external network; a first access control device connected to the first radio access network; and a second access control device connected to the second radio access network, the external network reception section is included in the external gateway device, the connection instruction processing section is included in the external gateway device or the first access control device, the transmission section is included in the second access control device, and the connection management section is included in the second access control device and the external gateway device.

(4) The mobile communication system of the present invention is **characterized in that:** the core network includes a selection processing section which selects a radio communication type in which the data is transmitted to the user equipment, and the connection instruction processing section of the core network causes the first radio access network to transmit the paging request directed to the user equipment and also transmit the connection instruction directed to the user equipment when a selection result of the selection processing section is the second radio communication type.

(5) The mobile communication system of the present invention is **characterized in that**: the connection instruction processing section of the core network causes the first radio access network to transmit the paging request directed to the user equipment when the external network reception section receives the data, and causes the first radio access network to transmit the connection instruction of the second radio communication type when the first radio access network receives a response of the paging request, and the first radio communication type communication section of the user equipment receives the paging request, transmits the response using the first radio communication type when the paging request is received, makes the transition to the reception enabled state, and receives the connection instruction of the second radio communication type.

(6) The mobile communication system of the present invention is **characterized in that**: the connection instruction processing section of the core network causes the first radio access network to transmit the paging request directed to the user equipment including the connection instruction of the second radio communication type when the external network reception section receives the data, and the first radio communication type communication section of the user equipment receives the paging request, extracts the connection instruction of the second radio communication type from the paging request, and makes the transition to the reception enabled state.

(7) The mobile communication system of the present invention is **characterized in that**: the connection instruction processing section selects a radio communication type in which the received data is transmitted to the user equipment, and causes a third radio access network communicating using a third radio communication type to transmit a paging request when the selected radio communication type is the third radio communication type having the paging function as one of the plurality of radio communication types excluding the first radio communication type, and the transmission section causes the third radio access network to transmit the data when a paging response of the third radio communication type is received.

(8) According to a radio communication method of the present invention, there is provided a radio communication method in a mobile communication system having at least one user equipment communicating using a plurality of radio communication types including one or more radio communication types having a paging function of causing a communication state of a corresponding radio communication type to transition from an idle state to a reception enabled state when a paging request is received, at least one core network communicating with an external network, and at least one radio access network communicating with the user equipment using a corresponding radio communication type in each of the plurality of radio communication types. The radio communication method includes: a first step in which the core network receives data transmitted from the external network to the user equipment; a second step in which the core network causes a first radio access network communicating using a first radio communication type to transmit a paging request directed to the user equipment using the first radio communication type having the paging function as one of the plurality of radio communication types and a connection instruction of a second radio communication type other than the first radio communication type as one of the plurality of radio communication types when the external network reception section receives the data; a third step in which the user equipment receives the paging request to cause a communication state of the first radio communication type to transition to the reception enabled state and receives the connection instruction; a fourth step in which the user equipment transmits the connection request using the second radio communication type designated by the connection instruction according to the received connection instruction and causes a communication state of the second communication type to transition to the reception enabled state; a fifth step in which the core network registers a connection by the second radio communication type with the user equipment when a second radio access network communicating using the second radio communication type receives a connection request from the user equipment; a sixth step in which the core network causes the second radio access network to transmit the data when the connection by the second radio communication type with the user equipment is registered in the fifth step; and a seventh step in which the user equipment receives the data using the second radio communication type when the communication state of the second communication type is the reception enabled state.

(9) According to a core network of the present invention, there is provided a core network communicating with user equipment via a radio access network corresponding to each of a plurality of radio communication types including one or more radio communication types having a paging function of causing a communication state of a corresponding radio communication type to transition to a reception enabled state when the user equipment of an idle state receives a paging request and further communicating with an external network. The core network includes: an external network reception section which receives data transmitted from the external network to the user equipment; a connection instruction processing section which causes a first radio access network communicating using a first radio communication type to transmit a paging request directed to the user equipment using the first radio communication type having the paging function as one of the plurality of radio communication types and a connection instruction of a second radio communication type other than the first radio communication type as one of the plurality of radio communication types when the external network reception section receives the data; a connection management section which registers a connection by the second radio communication type with the user equipment when a second radio access network communicating using the second radio communication type receives a connection request from the user equipment; and a transmission section which causes the second radio access network to transmit the data when the connection management section registers the connection by the second radio communication type with the user equipment.

(10) According to the user equipment of the present invention, there is provided user equipment communicating using a plurality of radio communication types including one or more radio communication types having a paging function of causing a communication state of a corresponding radio communication type to transition from an idle state to a reception enabled state when a paging request is received. The user equipment includes: a first radio communication type communication section which receives the paging request to cause a communication state of the first radio communication type to transition to the reception enabled state and receives the connection instruction; a second radio communication type connection section which transmits the connection request using the second radio communication type designated by the connection instruction according to the received connection instruction and causes a communication state of the second communication type to transition to the reception enabled state; and a second radio communication type communication section which receives the data using the second radio communication type when the communication state of the second communication type is the reception enabled state.

(11) According to a program of the present invention, there is provided a program for causing a computer of a core network communicating with user equipment via a radio access network corresponding to each of a plurality of radio communication types including one or more radio communication types having a paging function of causing a communication state of a corresponding radio communication type to transition to a reception enabled state when the user equipment in an idle state receives a paging request and further communicating with an external network, to function as: an external network reception section which receives data transmitted from the external network to the user equipment; a connection instruction processing section which causes a first radio access network communicating using a first radio communication type to transmit a paging request directed to the user equipment using the first radio communication type having the paging function as one of the plurality of radio communication types and a connection instruction of a second radio communication type other than the first radio communication type as one of the plurality of radio communication types when the external network reception section receives the data; a connection management section which registers a connection by the second radio communication type with the user equipment when a second radio access network communicating using the second radio communication type receives a connection request from the user equipment; and a transmission section which causes the second radio access network to transmit the data when the connection management section registers the connection by the second radio communication type with the user equipment.

(12) According to a program of the present invention, there is provided a program for causing a computer of user equipment communicating using a plurality of radio communication types including one or more radio communication types having a paging function of causing a communication state of a corresponding radio communication type to transition from an idle state to a reception enabled state when a paging request is received, to function as: a first radio communication type communication section which receives the paging request to cause a communication state of the first radio communication type to transition to the reception enabled state and receives the connection instruction; a second radio communication type connection section which transmits the connection request using the second radio communication type designated by the connection instruction according to the received connection instruction and causes a communication state of the second communication type to transition to the reception enabled state; and a second radio communication type communication section which receives the data using the second radio communication type when the communication state of the second communication type is the reception enabled state.

### Effect of the Invention

A mobile communication system of the present invention transmits a paging request in a first radio communication type having a paging function and also transmits a connection instruction of a second radio communication type having no paging function to user equipment. The user equipment makes a connection by the second radio communication type according to the connection instruction and sets the communication state of the second radio communication type to a reception enabled state. Therefore, it is possible to provide the user equipment of an idle state with communication data using a radio communication type having no paging function.

### BRIEF DESCRIPTION OF THE DRAWINGS

FIG. 1 is a schematic block diagram showing the network configuration of a mobile communication system 10 according to a first embodiment of the present invention.
FIG. 2 is a schematic block diagram showing the configuration of user equipment 50 according to the first embodiment.
FIG. 3 is a schematic block diagram showing the configuration of a base station device A31 according to the first embodiment.
FIG. 4 is a schematic block diagram showing the configuration of a base station device B41 according to the first embodiment.
FIG. 5 is a schematic block diagram showing the configuration of an access control device A23 according to the first embodiment.
FIG. 6 is a flowchart illustrating an operation of the access control device A23 according to the first embodiment.
FIG. 7 is a schematic block diagram showing the configuration of an access control device B24 according to the first embodiment.
FIG. 8 is a schematic block diagram showing the configuration of an external gateway device 21 according to the first embodiment.
FIG. 9 is a schematic block diagram showing the configuration of a home subscriber server 22 according to the first embodiment.
FIG. 10 is a diagram showing a sequence example of transmitting communication data by registering the user equipment 50 to a radio access network B40 using a paging function of a radio access network A30 according to the first embodiment.
FIG. 11 is a diagram showing another sequence example different from that of FIG. 10 in which communication data is transmitted by registering the user equipment 50 to the radio access network B40 using the paging function of the radio access network A3 0 according to the first embodiment.
FIG. 12 is a schematic block diagram showing the configuration of user equipment 150 according to a second embodiment of the present invention.
FIG. 13 is a schematic block diagram showing the configuration of a base station device A131 according to the second embodiment.
FIG. 14 is a schematic block diagram showing the configuration of an access control device A123 according to the second embodiment.
FIG. 15 is a diagram showing a sequence example of transmitting communication data by registering the user equipment 150 to a radio access network B40 using a paging function of a radio access network A130 according to the second embodiment.
FIG. 16 is a schematic block diagram showing the network configuration of a mobile communication system 11 according to a third embodiment of the present invention.
FIG. 17 is a schematic block diagram showing the configuration of user equipment 55 according to the third embodiment.
FIG. 18 is a schematic block diagram showing the configuration of a base station device C43 according to the third embodiment.
FIG. 19 is a schematic block diagram showing the configuration of an access control device C26 according to the third embodiment.
FIG. 20 is a diagram showing a sequence example of setting the user equipment 55 to a reception enabled state using a paging function of a radio access network C45 and transmitting communication data according to the third embodiment.

### Reference Symbols

10, 11 ... MOBILE COMMUNICATION SYSTEM
20, 25 ... CORE NETWORK
21 ... EXTERNAL GATEWAY DEVICE
22 ... HOME SUBSCRIBER SERVER
23, 123 ... ACCESS CONTROL DEVICE A
24 ... ACCESS CONTROL DEVICE B
26 ... ACCESS CONTROL DEVICE C
30, 130 ... RADIO ACCESS NETWORK A
31, 32, 131, 132 ... BASE STATION DEVICE A
40 ... RADIO ACCESS NETWORK B
41, 42 ... BASE STATION DEVICE B
45 ... RADIO ACCESS NETWORK C
43, 44 ... BASE STATION DEVICE C
50, 55, 150 ... USER EQUIPMENT
51, 56 ... RADIO COMMUNICATION IF SECTION
52 ... RADIO CONTROL SECTION
53, 57, 153 ... COMMUNICATION CONTROL SECTION
60 ... PACKET DATA NETWORK
310,410 ... RADIO CONTROL SECTION
320,420,1320 ... RADIO NETWORK CONTROL SECTION
321 ... RADIO COMMUNICATION CONTROL SECTION
322 ... BASE STATION INFORMATION NOTIFICATION SECTION
323, 1323 ... PAGING NOTIFICATION SECTION
330 ... UE MANAGEMENT SECTION
331 ... UE INFORMATION MANAGEMENT SECTION
332 ... RAN INFORMATION MANAGEMENT SECTION
340, 440 ... COMMUNICATION CONTROL SECTION
341, 441 ... RADIO COMMUNICATION IF SECTION
342 ... DATA RECEPTION SECTION
343 ... DATA TRANSMISSION SECTION
511 ... TYPE A SECTION
512 ... TYPE B SECTION
513 ... TYPE C SECTION
531 ... RAN CONNECTION DETERMINATION SECTION
532, 1532 ... RAN CONNECTION SECTION
533, 1533 ... PAGING RECEPTION SECTION
534 ... RADIO A CONTROL SECTION
535 ... RADIO B CONTROL SECTION
536 ... RADIO C CONTROL SECTION
610, 710 ... COMMUNICATION CONTROL SECTION
611 ... DATA RECEPTION SECTION
612 ... DATA TRANSMISSION SECTION
613 ... BUFFER SECTION
620, 720, 1620 ... MOBILITY MANAGEMENT SECTION
621 ... LOCATION MANAGEMENT SECTION
622 ... HANOVER SECTION
623, 1623 ... PAGING SECTION
630, 1630 ... NETWORK ACCESS CONTROL SECTION
631, 1631 ... AVAILABLE RAN DETERMINATION SECTION
632 ... SUBSCRIBER INFORMATION MANAGEMENT SECTION
633 ... UE STATE MANAGEMENT SECTION
810 ... DATA RECEPTION SECTION
811 ... PDN CONNECTION SECTION
812 ... BUFFER PROCESSING SECTION
813 ... BUFFER SECTION
820 ... DATA TRANSMISSION SECTION
821 ... TRANSMISSION SECTION
822 ... PATH CONTROL SECTION
830 ... RAN MANAGEMENT SECTION
831 ... UE REGISTRATION STATE MANAGEMENT SECTION
832 ... AVAILABLE RAN DETERMINATION SECTION
901 ... SERVICE SUBSCRIBER INFORMATION MANAGEMENT SECTION
902 ... USER IDENTIFICATION INFORMATION MANAGEMENT SECTION
903 ... USER LOCATION INFORMATION MANAGEMENT SECTION

### BEST MODE FOR CARRYING OUT THE INVENTION

### [First Embodiment]

Hereinafter, a first embodiment of the present invention will be described with reference to the drawings. In this embodiment, a user equipment having radio communication means corresponding to two radio communication types of a radio communication type A having a paging function and a radio communication type B having no paging function is called by sending a paging request from a network side by the radio communication type A. The network side instructs the user equipment to establish a connection to the radio communication type B, causes a communication state of the radio communication type B to transition to a reception enabled state, and transmits communication data in the radio communication type B from the network side.
This makes it possible to transmit communication data from the network side to the user equipment of an idle state by the radio communication type B having no paging function. The paging function is a function of making the transition to the reception enabled state in which general communication is possible by sending a call from the network side to the user equipment in the idle state. The idle state in the radio communication type A is a state in which general communication data is incapable of being received, but a location or the like of its own device is registered to the network and the reception of a paging request is possible. Power consumption is capable of being suppressed since the number of signals to be monitored is small in the idle state as compared to the reception enabled state.

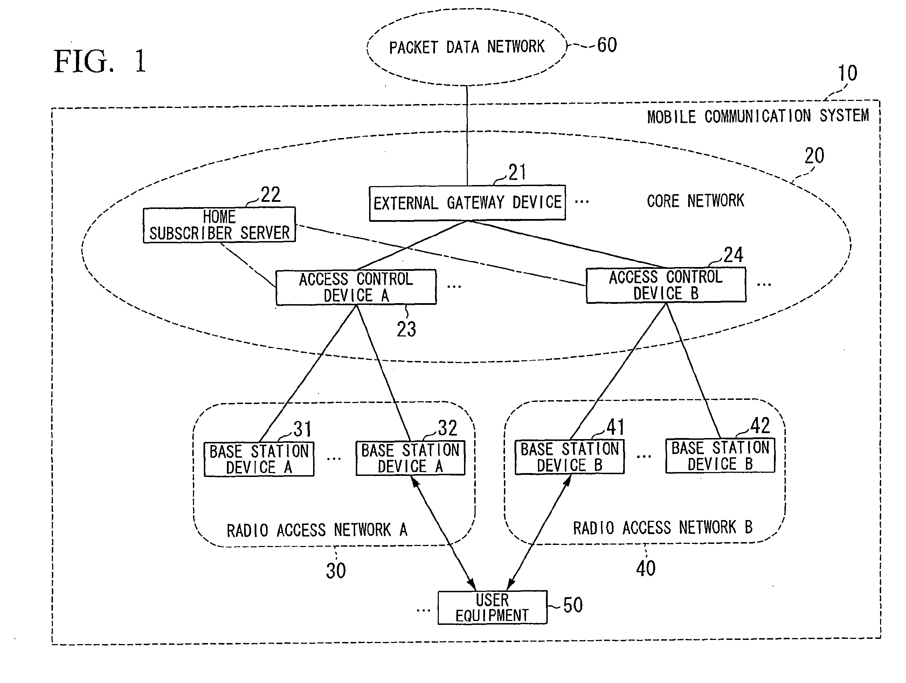

FIG. 1 is a schematic block diagram showing the network configuration of a mobile communication system 10 according to this embodiment. As shown in FIG. 1, the functional architecture of the mobile communication system 10 is roughly divided into two of a radio access network (a radio access network A30 and a radio access network B40) and a core network 20. In this embodiment, access control devices A23 and B24 function as the gateway devices of the radio access network A30, the radio access network B40, and the core network 20. An external gateway device 21 functions as the gateway device of a packet data network 60 and the mobile communication system 10. The radio access networks A30 and B40 allocate radio resources of a transmission band and the like. User information is transmitted between the user equipment 50 and the core network 20 using the radio resources. Since a different radio access network may exist for a different radio communication type, a radio communication type to be used is different between the radio access network A30 and the radio access network B40. The radio communication type A to be used by the radio access network A30 has a paging function of making the transition to the reception enabled state by sending a paging request to the user equipment 50 in the idle state. On the other hand, the radio communication type B to be used by the radio access network B40 does not have the paging function. The user equipment 50 transitions to the reception enabled state after a connection request is transmitted from the user equipment 50 to the radio access network B40.

The radio access network A30 and the radio access network B40 include a plurality of base station devices A31, A32, B41, and B42. That is, the radio access network A30 includes the base station devices A31 to 32 and the radio access network B40 includes the base station devices B41 to 42. The radio access networks A30 and B40 respectively include two base station devices, but this is illustrative. The number of base station devices is not limited thereto. The base station device performs the control by a radio protocol such as radio resource control, radio link control, media access control, or the like. The base station device performs the management such as the allocation of radio channels. The base station devices A31 to A32 of the radio access network A30 are managed by the access control device A23 within the core network 20, and the base station devices B41 to B42 of the radio access network B40 are managed by the access control device B24 within the core network 20. Here, an example of the radio access network including the two radio access networks A30 and B40 has been described, but radio access networks whose number exceeds 2 may be constituted in response to a corresponding radio communication type of the user equipment 50.

The core network 20 transmits user information of audio or data divided into packets between the radio access networks A30 and B40 or between the radio access networks A30 and B40 and a Packet Data Network (PDN) 60 as an external network based on a service request of a user (user equipment 50). The core network 20 includes an external gateway device (PDN Gateway: PGW) 21 which establishes a connection between the mobile communication system 10 and the packet data network 60, the access control devices (Serving Gateways: SGWs) A23 and B24 which manage the location of the user equipment 50, control the radio access networks, and manage the base station devices A31 to A32 and B41 to B42 within the radio access networks A30 and B40, and a Home Subscriber Server (HSS) 22 which manages subscribers.

The user equipment 50 has radio communication means corresponding to radio communication means of each of the radio access network A30 and the radio access network B40, and is connected to each radio access network via each communication interface (IF). In this embodiment, the user equipment 50 is connectable to the two radio access networks A30 and B40, but may have radio communication means of radio communication types whose number exceeds 2. The radio communication means may share one antenna to have connection functions corresponding to a plurality of radio communication types, may have an antenna for each radio communication type and a connection function corresponding to the radio communication type, and may be simultaneously connected to a plurality of radio access networks. The user equipment 50 is connectable to the core network 20 via each of the radio access networks A30 and B40 and is connectable to the packet data network 60 via the external gateway device 21 of the core network 20.

In this embodiment, the network configuration in which the access control devices A23 and B24 are connected to the base station devices A31 to A32 and B41 to B42 of the radio access networks A30 and B40 is made. Alternatively, a hierarchical structure may be made by placing a device to more hierarchically manage the base station devices among the access control devices A23 and B24 and the base station devices A31 to A32 and B41 to B42, and the hierarchized device may be constituted to be arranged at the sides of the radio access networks A30 and B40. A load may be distributed by arranging a plurality of external gateway devices 21 and a plurality of access control devices A23 and B24, or a plurality of access control devices may be arranged to manage a plurality of base station devices of one radio access network for a geographic hierarchy.

One device having the functions of the external gateway device 21 and the access control device A23 or the access control device B24 may be used. One device having the functions of the access control device A23 and the base station device A31 may be used. One device having the functions of the access control device B24 and the base station device B41 may be arranged. The access control device A23 or B24 is functionally distinguished from the external gateway device 21, but they may be the same device. A network of the mobile communication system 10 as shown in FIG. 1 may be implemented by connecting an access control device arranged in another radio access network to the same device.

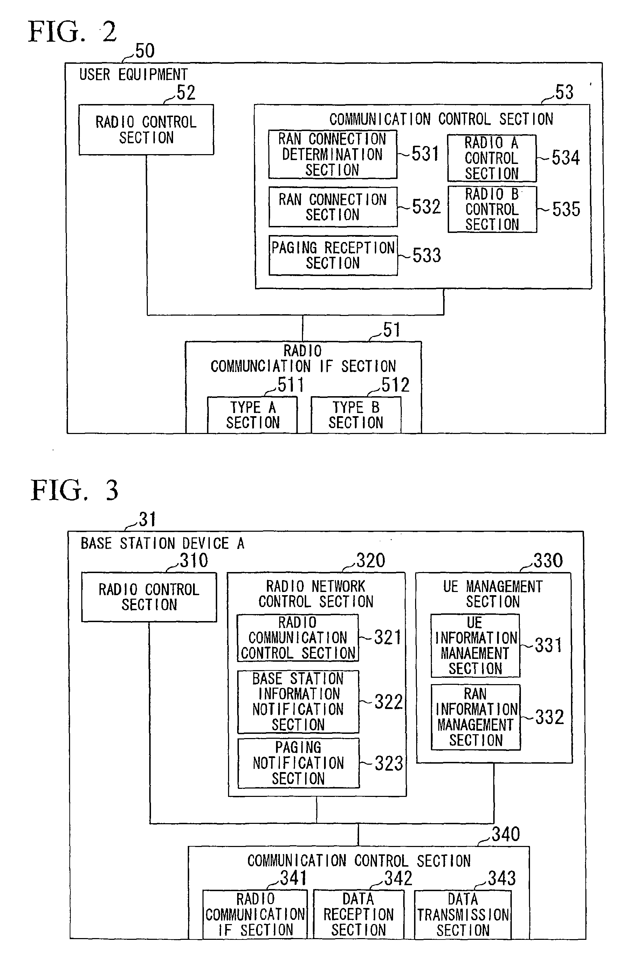

Next, FIG. 2 is a schematic block diagram showing the configuration of the user equipment 50 according to this embodiment. As shown in FIG. 2, the user equipment 50 includes a radio communication IF (interface) section 51, a radio control section 52, and a communication control section 53. The radio communication IF section 51 includes a type A section 511 which performs communication among the user equipment 50, the base station devices A31 to A32 within the radio access network A30, and the access control device A23 via a radio connection, and a type B section 512 which performs communication among the user equipment 50, the base station devices B41 to B42 within the radio access network B40, and the access control device B24 via a radio connection. The radio control section 52 performs a control operation by the radio communication type A and the radio communication type B in a physical layer such as multiplexing (demultiplexing), channel coding (channel decoding), spread (despread), or modulation (demodulation) for transmission/reception among the user equipment 50 and the base station devices A31 to 32 and B41 to 42 by carrying information on radio waves. The radio control section 52 performs a control operation for radio communication with the base station devices A31 to A32 and B41 to B42 such as radio channel control, a search for the base station devices A31 to A32 and B41 to B42, or a control operation for transmitting/receiving a radio signal by controlling the radio communication IF section 51.

The communication control section 53 is capable of establishing a connection between the user equipment 50 and the radio access networks A30 and B40 by controlling communication using a radio protocol with the base station devices A31 to A32 and B41 to B42 within the radio access networks A30 and B40 via the radio communication IF section 51. Furthermore, the communication control section 53 controls location registration of the user equipment 50, registration to each device constituting the mobile communication system 10, or network connection setup for a connection to the packet data network 60. Upon registration to the mobile communication system 10, the communication control section 53 transmits authentication information for authenticating the user and information (UE Capability: hereinafter, referred to as "retention function information") of the type A section 511 and the type B section 512 provided in the radio communication IF section 51 of the user equipment 50.

The communication control section 53 includes a RAN (Radio Access Network) connection determination section 531, a RAN connection section 532, a paging reception section 533, a radio A control section 534, and a radio B control section 535. In the reception enabled state, the radio A control section 534 transmits/receives communication data via the type A section 511. When the received communication data is an attach change request (connection instruction), the radio A control section 534 outputs the attach change request to the RAN connection section 532. In the reception enabled state, the radio B control section (second radio communication type section) 535 transmits/receives communication data via the type B section 512.

The RAN connection determination section 531 determines whether or not the type A section 511 and the type B section 512 can be respectively connected to the corresponding radio access networks A30 and B40 from information obtained from the radio control section 52. If a packet destined for the user equipment 50 reaches from the packet data network 60 to the mobile communication system 10 when the user equipment 50 is in the idle state, the paging reception section 533 performs a paging process to set the user equipment 50 to the reception enabled state, but performs a process to set the radio A control section 534 to the reception enabled state by receiving a paging request transmitted by the paging process.

Upon receipt of an attach change request including an identifier designating the radio access network A30 or B40, the RAN connection section (second radio communication type connection section) 532 analyzes the identifier, performs a transmission process of an attach request for the registration or connection to a corresponding radio access network, and causes the corresponding radio A control section 534 or the corresponding radio B control section 535 to transition to the reception enabled state. In this embodiment, the radio A control section 534 and the paging reception section 533 function as the first radio communication type communication section.

Next, FIG. 3 is a schematic block diagram showing the configuration of the base station device A (first base station section) 31 according to this embodiment. The base station devices A31 to A32 provided in the radio access network A30 have the same configuration as the base station device A31. As shown in FIG. 3, the base station device A31 includes a radio control section 310, a radio network control section 320, a UE (User Equipment) management section 330, and a communication control section 340.

The radio control section 310 performs a control operation by the radio communication type A in a physical layer such as multiplexing (demultiplexing), channel coding (channel decoding), spread (despread), or modulation (demodulation) for transmission/reception between the user equipment 50 and the base station device A31 by carrying information on radio waves. The radio control section 310 also performs a control operation regarding radio resources such as the control of radio channels, the allocation of radio resources to the user equipment 50, or the like.

The radio network control section 320 includes a radio communication control section 321, a base station information notification section 322, and a paging notification section 323. The radio communication control section 321 manages communication control within the radio access network A30, implements radio protocol functions such as radio resource control, radio link control, media access control, and the like, and manages the allocation of radio channels by controlling the radio control section 310. Simultaneously, communication control for setting a bearer service between the user equipment 50 and the access control device A23 is also performed. The paging notification section 323 includes the control of the user equipment 50 as in a paging function for causing the user equipment 50 to transition from the idle state to the reception enabled state. The base station information notification section 322 acquires information for a connection to the base station devices A31 and A32 or the base station devices B41 and B42 from the RAN information management section 332, instructs the paging notification section to include the above-described information in the paging request, and transmits an attach request to the user equipment 50 by including the above-described information in the attach request, or transmits the information for the connection to the base station devices A31 and A32 or the base station devices B41 and B42 to the user equipment 50.

The UE management section (connection management section) 330 includes a UE information management section 331 and a RAN information management section 332. The UE information management section 331 manages retention function information transmitted from the user equipment 50. The RAN information management section 332 manages information for the connection to the base station device like a radio channel frequency, a bandwidth, or a base station identifier to be used by the base station device of another radio access network located within a communication area (cell) of the base station device A31. The UE management section 330 transmits information to be managed by the UE information management section 331 and the RAN information management section 332 to the user equipment 50 in response to a request from the mobile communication system 10 or the user equipment 50.

The communication control section 340 includes a radio communication IF section 341, a data reception section 342, and a data transmission section 343. The data transmission section 343 transmits a control signal or communication data between the user equipment 50 and the access control device A23. The data reception section 342 receives a request message from the access control device A23 to the base station device A31 for a radio resource allocation or paging request between the user equipment 50 and the base station device A31, and transfers information included in the message to the radio control section 310 or the radio network control section 320. The radio communication IF section 341 communicates with the user equipment 50 using the radio communication type A in response to a request from the radio control section 310 or the radio network control section 320.

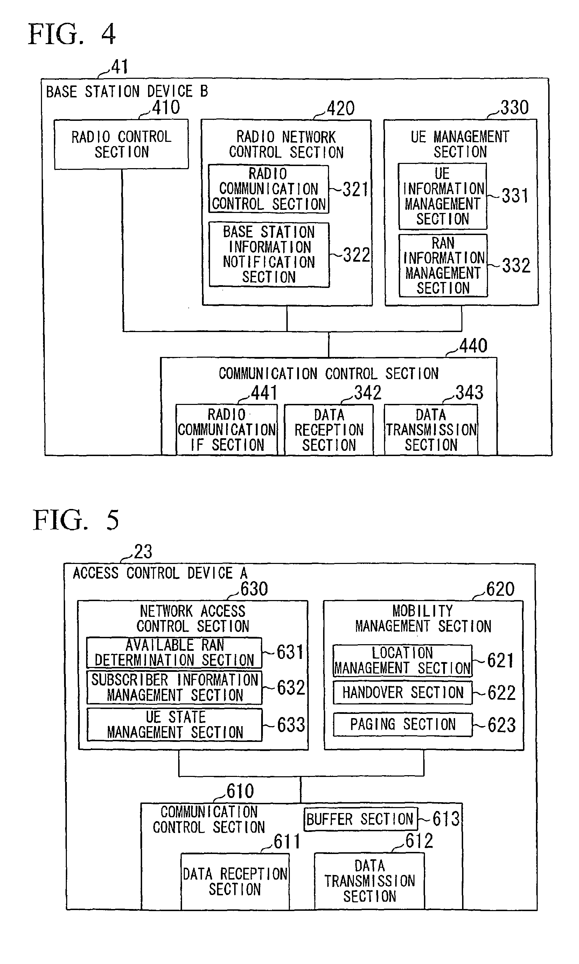

Next, FIG. 4 is a schematic block diagram showing the configuration of the base station device B (second base station section) 41 according to this embodiment. The base station devices B41 to B42 provided in the radio access network B40 have the same configuration as the base station device B41. In the same figure, the same reference numerals are assigned to the sections (321, 322, 330, 331, 332, 342, and 343) corresponding to those of FIG. 3, and hence description thereof is omitted. As shown in FIG. 4, the base station device B41 includes a radio control section 410, a radio network controls section 420, a UE management section 330, and a communication control section 440.

The radio control section 410 performs a control operation by the radio communication type B in a physical layer such as multiplexing (demultiplexing), channel coding (channel decoding), spread (despread), or modulation (demodulation) for transmission/reception between the user equipment 50 and the base station device B41 by carrying information on radio waves. The radio control section 410 also performs a control operation regarding radio resources such as the control of radio channels, the allocation of radio resources to the user equipment 50, or the like. The radio network control section 420 includes a radio communication control section 321 and a base station information notification section 322. The radio network control section 420 is different from the radio network control section 320 of the base station device A31 in that the radio network control section 420 does not have the paging notification section 323.

The communication control section 440 includes a radio communication IF section 441, a data reception section 342, and a data transmission section 343. The communication control section 440 is different from the communication control section 340 of the base station device A31 in that the communication control section 440 has the radio communication IF section 441 in place of the radio communication IF section 341. The radio communication IF section 441 communicates with the user equipment 50 using the radio communication type B in response to a request from the radio control section 410 or the radio network control section 420.

Next, FIG. 5 is a schematic block diagram showing the configuration of the access control device A23 according to this embodiment. As shown in FIG. 5, the access control device A23 includes a communication control section 610, a mobility management section 620, and a network access control section 630. The communication control section 610 includes a data reception section 611 which sets up a bearer with the user equipment 50 requested from the external gateway device 21 and receives communication data to be communicated by a bearer service provided by the bearer, and a data transmission section 612 which routes and transmits the received communication data according to the bearer setup.

The communication control section 610 also provides a function of transmitting communication data to an access control device arranged in another radio access network in which the corresponding user equipment 50 is registered or scheduled to be registered in response to a situation. Furthermore, the user equipment 50 includes a buffer section 613 which accumulates communication data transmitted from the external gateway device 21 to the user equipment 50 while the user equipment 50 is in the idle state until the user equipment 50 reaches the reception enabled state. Buffering may be performed in the access control device without performing buffering (temporary data storage) in the external gateway device by a type of radio access network in which the user equipment 50 is registered or a type of available radio access network. Even when the buffering is performed in the access control device A23, a buffering device may be changed to the external gateway device 21 by a type of radio access network which transmits communication data.

The mobility management section 620 includes a location management section 621 which tracks the location of the user equipment 50, a paging section (connection instruction processing section) 623 which receives an instruction of an available RAN determination section 631 to be described later when an incoming call directed to the user equipment 50 exists, and causes the base station device A32 connected to the user equipment 50 to transmit a paging request calling the user equipment 50, and a handover section 622 which performs a handover through cooperation with the communication control section 610 in response to the location update of the user equipment 50. The paging section 623 also has a function of requesting an access control device arranged in the radio access network for transmitting/receiving communication data to perform a paging operation in a paging request calling the user equipment 50 by receiving an instruction of the available RAN determination section 631.

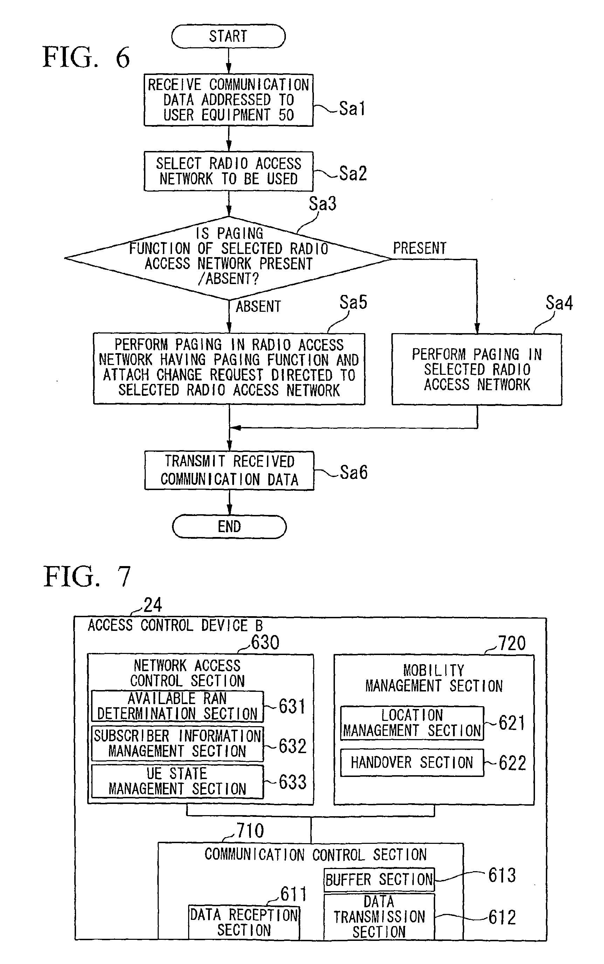

The network access control section 630 includes a UE state management section 633 which controls communication between the base station devices A31 to A32 within the radio access network A30 via the communication control section 610 using a dedicated protocol and registers the user equipment 50 based on an attach request sent via the base stations A31 to A32, and a subscriber information management section 632 which performs user authentication. The network access control section 630 includes the available RAN determination section 631 to determine a data transmission route rearrangement which selects a radio access network and a base station device via which communication with the user equipment 50 is performed or to determine the control of a communication message from the user equipment 50, the control of a communication message with the base station devices A31 to A32, and paging means by whether or not a radio access network to be used has the paging function. FIG. 6 shows a flowchart example in which the available RAN determination section 631 determines a radio access network to be used and selects the paging means based on the determined radio access network.

When communication data of which a transmission route is not defined is received from the external gateway device 21 (Sa1), the available RAN determination section 631 determines the transmission route of the communication data by selecting a radio access network (Sa2). When the selected radio access network is the radio access network A30 having the paging function (Sa3-PRESENT), the available RAN determination section 631 instructs the paging section 623 to transmit the paging request of the radio access network A30 as in the past (Sa4). When the selected radio access network is the radio access network B40 having no paging function (Sa3-ABSENT), the available RAN determination section 631 instructs the paging section 623 to transmit the paging request by the radio access network A30 having the paging function, and also transmits a transmission instruction of an attach change request directed to the radio access network B40 to the base station device A32 connected to the user equipment 50 (Sa5). When communication is possible in the radio access network selected in step Sa2 by the paging of step Sa4 or the attach change request of step Sa5, the available RAN determination section 631 transmits communication data (Sa6).

Here, the paging request transmitted to the access control device B24 may transfer communication data itself by encapsulating communication data, buffered by the buffer section 613 of the access control device A23, addressed to the access control device B with an IP header or writing the IP header. The access control device B receiving the above-described communication data enables the user equipment 50 to perform the reception according to the paging method in the radio communication type B as in the past. The network access control section 630 acquires information such as service subscriber information or user identification information necessary to register the user equipment 50 or authenticate the user by referring to the home subscriber server 22. The service subscriber information also includes contract information or QoS (Quality of Service) information of a radio access network accessible by the user.

The UE state management section (connection management section) 633 manages the idle state and the reception enabled state for the user equipment 50 registered in the mobile communication system 10 in a state in which the location management is performed, and manages the state of the user equipment 50 so that the user equipment 50 is set to the reception enabled state using the paging section 623 of the mobility management section 620 so as to transmit communication data in the idle state. The available RAN determination section 631 determines the radio access network to be used by referring to the user's subscriber information stored by the subscriber information management section 632, location information of the user equipment 50, or communication data transmitted to the user equipment 50.

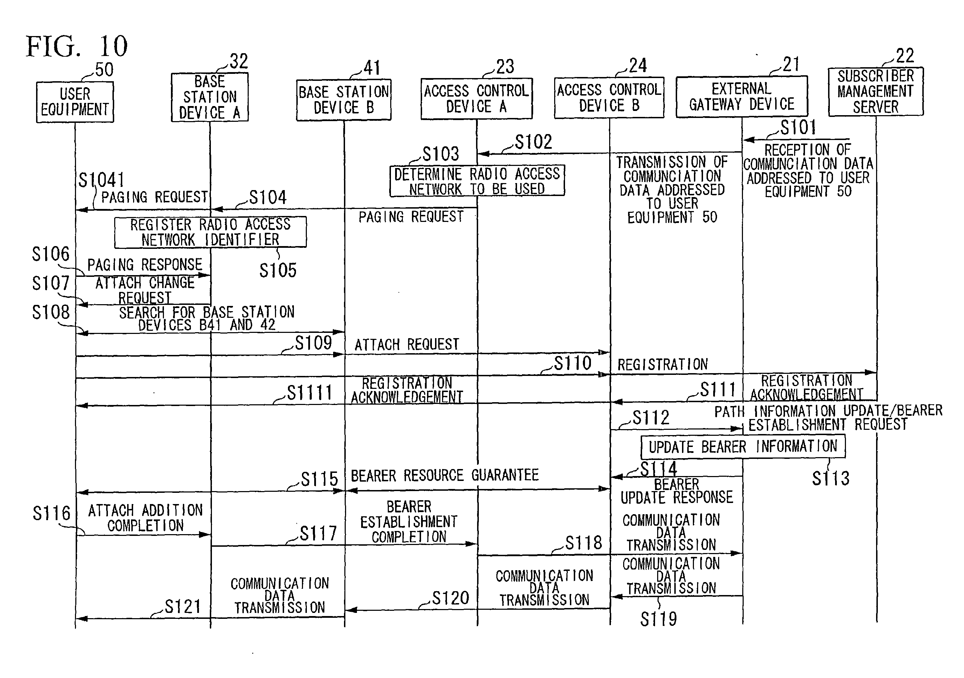

Next, FIG. 7 is a schematic block diagram showing the configuration of the access control device B24 according to this embodiment. In the same figure, the same reference numerals are assigned to the sections (611, 612, 613, 621, 622, 630, 631, 632, and 633) corresponding to those of FIG. 5, and hence description thereof is omitted. As shown in FIG. 7, the access control device B24 includes a communication control section 710, a mobility management section 720, and a network access control section 630. The mobility management section 720 is different from the mobility management section 620 of the access control device A23 in that the mobility management section 720 is not provided with the paging section 623. In the sequence example shown in FIG. 10 of this embodiment, the available RAN determination section 631 of the access control device A23 functions as a connection instruction processing section, and the data transmission section 612 of the access control device B24 functions as a transmission section.

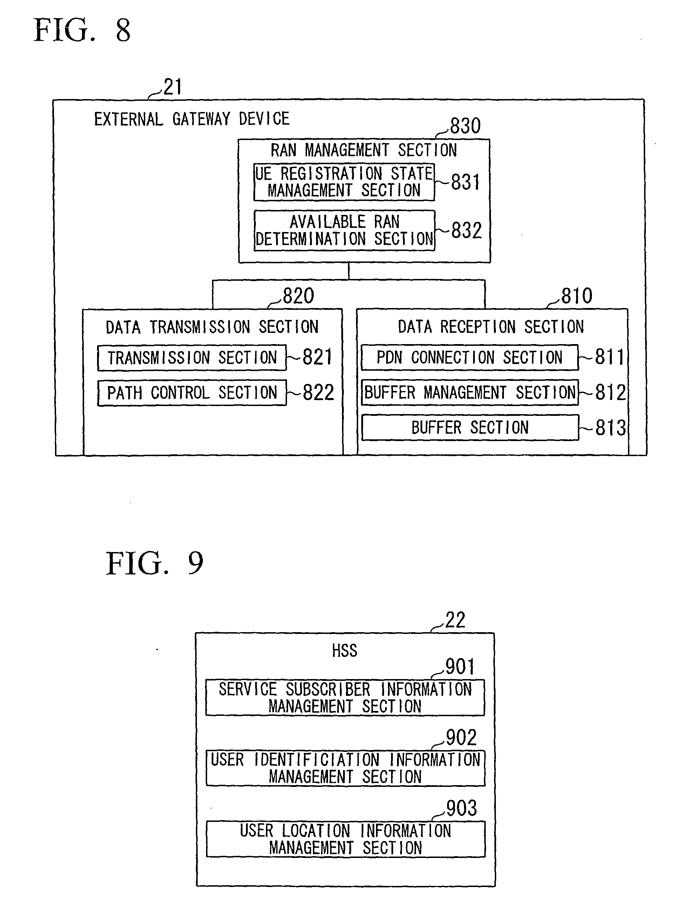

Next, FIG. 8 is a schematic block diagram showing the configuration of the external gateway device 21 according to this embodiment. As shown in FIG. 8, the external gateway device 21 includes a data reception section 810, a data transmission section 820, and a RAN (radio access network) management section 830.
The data reception section (external network reception section) 810 includes a PDN connection section 811 which establishes a connection between the mobile communication system 10 and the packet data network 60, bearer setup with the user equipment 50, or a transmission path of provided communication data directed to the access control devices A23 and B24, and a buffer processing section 812 which accumulates the communication data transmitted from the packet data network 60 to the user equipment 50 in the buffer section 813 while the user equipment 50 is in the idle state until the user equipment 50 reaches the reception enabled state. The buffer processing section 812 determines whether to accumulate the communication data addressed to the user equipment 50 in the buffer section 813 of a corresponding device by a type of radio access network registered in the mobile communication system 10, and performs a buffering operation in the external gateway device 21 and the access control device A23 or B24 according to the determination result.

The data transmission section 820 includes a path control section (connection management section) 822 which performs a path control operation (bearer setup or tunnel path setup directed to the access control devices A23 and B24) and a transmission section 821 which transmits communication data, and has a function of a router. When the path control section 822 sets up bearer and tunnel paths for communication data accumulated in the buffer section 813 by the buffer processing section 812, the transmission section 821 reads the communication data and transmits the read communication to the user equipment 50 via the base station device B41. The transmission section 821 which transmits the communication data also performs transmission from the access control device A23 to the access control device B24. Furthermore, the data transmission section 820 manages subscriber information such as billing information, service quality information, service subscription situation, or the like, and performs a data capture operation and a count operation for billing based on the above-described subscriber information, a QoS control operation, and the like. The subscriber information is sent from the home subscriber server 22 via the access control devices A23 and B24 or another network device.

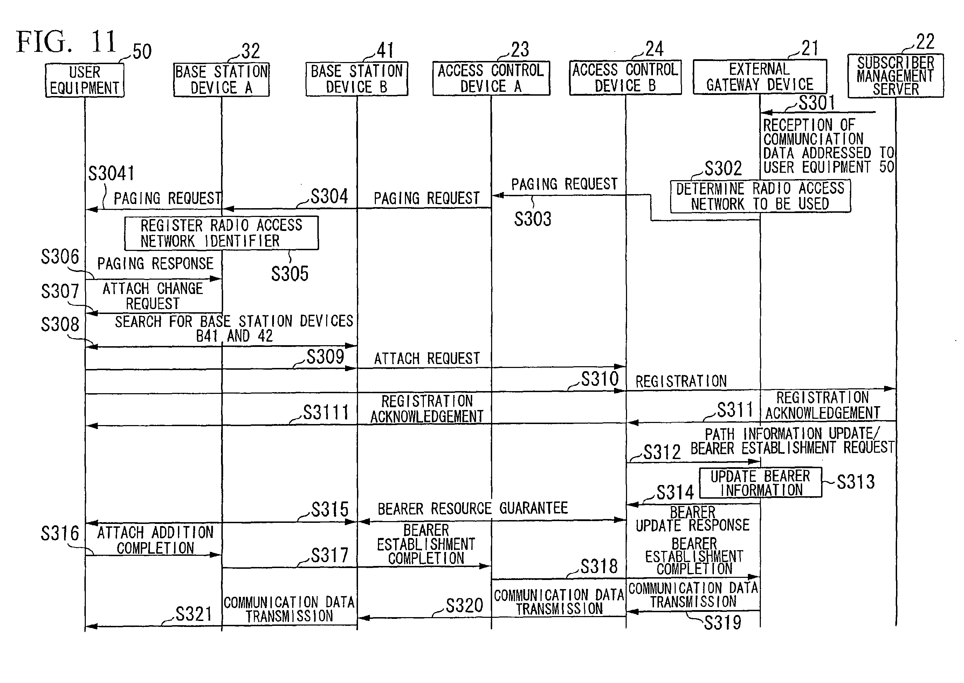

The RAN management section 830 includes a UE registration state management section 831 which manages the registration state of the user equipment 50 and an available RAN determination section 832 which determines the radio access network to be used by referring to the registration state of the user equipment 50, a use state of the network, or communication data sent to the user equipment 50, and an available RAN determination section 832 which provides the access control device A23 connected to the user equipment 50 with a transmission instruction of a paging request and an attach change request directed to the determined radio access network. In the sequence example shown in FIG. 11 of this embodiment, the available RAN determination section 832 of the external gateway device 21 functions as a connection instruction processing section and the transmission section 821 of the external gateway device 21 functions as a transmission section. When the available RAN determination section 832 functions as the connection instruction processing section, the available RAN determination section 832 operates according to the flowchart shown in FIG. 6 like the available RAN determination section 631.

Next, FIG. 9 is a schematic block diagram showing the configuration of the home subscriber server 22 according to this embodiment. As shown in FIG. 9, the home subscriber server 22 includes a service subscriber information management section 901, a user identification information management section 902, and a user location information management section 903. User identification information stored by the user identification information management section 902 is an IMSI (International Mobile Subscriber Identity), an MS-ISDN (MS International PSTN/ISDN Number), or the like. By referring to this information, registration of the user equipment 50 to the mobile communication system 10 or user authentication is performed.

The service subscriber information management section 901 stores an identifier for identifying the packet data network 60 of a connection destination or the packet data network 60 for each subscriber, the IP address of the user equipment 50, information of a radio access network of a subscription contract, or a QoS parameter value. The subscription information of the user is used to manage the access of a service transmitted to the external gateway device 21 connected to the user by referring to user location information managed by the user location information management section 903. The user location information management section 903 manages information regarding the core network 20 to which the user equipment 50 belongs at present. A location range of the user is determined by the managed information. In this regard, there is a possibility that the system configuration of a mobile communication network which implements this function differs according to a protocol of each mobile communication network, and it is not limited thereto.

FIG. 10 shows a sequence example of transmitting communication data via the radio access network B40 by registering the user equipment 50 to the radio access network B40 using the paging function of the radio access network A30. In this sequence example, as described with reference to FIGS. 5 and 7, the access control device A23 having the paging function is connected to the radio access network A30 and the access control device B24 connected to the radio access network B40 does not have the paging function. An example of the operation of each section when the state at the start time of this operation sequence example is the idle state in which the user equipment 50 has been registered to the radio access network A30 and an attach operation to the radio access network B40 is performed via the base station device A31 of the radio access network A30 will be described.

A process in which communication data transmitted from the packet data network 60 to the user equipment 50 is transmitted to the access control device A23 via the external gateway device 21 is the same as that using a paging type as in the past. That is, when the external gateway device 21 receives communication data addressed to the user equipment 50 (S101), the external gateway device 21 transmits the received communication data to the access control device A23 since buffering is set to be performed by the access control device A23 (S102). The access control device A23 determines a radio access network, for example, using the conditions that a contract established by a user is available, QoS required for a service of communication data is satisfied, a location (paging area) indicated by location information of the user equipment 50 is included in a communication area, and communication by a function provided in the user equipment 50 is possible by referring to service subscriber information managed by the subscriber information management section 632 of the network access control section 630 and referring to the user's subscriber information, location information of the user equipment 50, or communication data transmitted to the user equipment 50. Here, it is assumed that the radio access network B40 is selected (S103).

When the radio access network to be used is determined, the access control device A23 reports a paging request including information for identifying the radio access network B40 in a paging request message via the base station device A32 belonging to a corresponding paging area based on the paging area where the user equipment 50 is registered (S104 and S1041). Each of the base station devices A31 and 32 receiving the paging request from the access control device A23 registers a radio access network identifier included in the paging request associated with retention function information regarding the user equipment 50 to the UE information management section 331 of the UE management section 330 (S105). The base station devices A31 and 32 report a paging request including a requested identifier of the user equipment 50 to the user equipment 50 under its own device. In this embodiment, the UE information management section 331 of the base station device A32 manages retention function information based on information transmitted from the user equipment 50 while the user equipment 50 is attached to the radio access network A30.

The user equipment 50 receiving the paging request transmits a paging response to the base station device A32 connected at present (S106). Here, the user equipment 50 includes signal channel setting for transmitting a call setup signal in the paging response and transmits the paging response. Here, the base station device A32 receiving the above-described paging response may prepare a connection for transmitting communication data using the radio access system A30 by setting a radio signal channel with the user equipment 50 when the user equipment 50 is not connectable to the radio access network B40.

The base station device A32 acquires location information of the user equipment 50 within an area (cell) managed by the base station device A32 by receiving the paging response from the user equipment 50 (which specifies a sector where the user equipment 50 is located). The base station device A32 provides the user equipment 50 with an attach change request including information for connecting the user equipment 50 to the base station device B41 of the radio access network B40 within the sector specified from the paging response by referring to location information of the user equipment 50 and information managed by the UE information management section 331 (S107).

The user equipment 50 may determine which of the base station devices B41 and 42 is connected thereto by providing the user equipment 50 with connection information for a connection to each of the plurality of base station devices B41 and 42 when the plurality of base stations B41 and 42 is located within the same sector by a service range of the base station devices B41 and 42 of the radio access network B40 belonging to the above-described sector, the radio access network A30, and the radio access network B40. The base station device A32 of the radio access network A30 may determine the base station device B41 of the connection destination to transmit only the connection information of the determined base station device B41.

In this sequence example, the base station device A32 of each radio access network stores in advance the connection information of the other base station devices B41 and 42 in the UE management section 330. Here, the above-described connection information includes a radio frequency or bandwidth to be used by the base station devices B41 and B42 of the connection destination, authentication information for a connection to the radio access network B40, or the like. An SSID (Service Set Identifier) which is as an access point identifier as the authentication information may be transmitted when the radio access network B40 is a radio LAN (WLAN). The above-described connection information is not stored in the UE management section 330, but is held in advance within the user equipment 50. The base station device A32 may provide the user equipment 50 with information capable of identifying the connection information for a connection to at least the radio access network B40 such as an index number of a management table indicating the connection information or the like.

When the attach change request of sequence S107 is received, the user equipment 50 searches for the base station device B41 and B42 of the radio access network B40 based on the above-described connection information transmitted from the radio access network A30 (part of S 108). In this sequence example, it is possible to connect to the base station device B41 of the radio access network B40. When the base station device B41 of the connectable radio access network B40 is discovered (part of S 108), the user equipment 50 transmits an attach request including a UE identifier or an information element of an attach type or the like to the above-described base station device B41 (S109). When information for a connection to the plurality of base station devices B41 and B42 is included in the attach change request, the user equipment 50 determines a base station device to be connected by radio quality information like the radio wave strength or the congestion situation of the base station devices B41 and B42 (part of S 108). The attach request includes an identifier of the access control device B24 connected to the base station device B41 of the radio access network B40 or the external gateway device 21, retention function information of the user equipment 50, or the like. Here, the user equipment 50 determines the base station device B41 to be connected, but the base station device B41 to be connected may be decided by a determination at a base station device side.

The base station device B41 transmits the attach request to the access control device B24 after adding necessary information to be included in the attach request transmitted from the user equipment 50 to the UE management section 330 (S109). When the connectable base station device B41 has not been discovered in the process of sequence S 108, the user equipment 50 performs a process to receive communication data via the radio access network A30 since the paging process as in the past is completed by transmitting an attach change failure message to the base station device A32. In this embodiment, the access control device A23 has determined a radio access network to be used in sequence S103. Alternatively, for example, after the access control device A23 performs transmission by referring to service subscriber information and including a condition of selecting a radio access network such as a priority by a radio access type in paging request conditions and the base station device A32 specifies a sector where the user equipment 50 is located, the base station device A32 may determine the radio access network from a list of base station devices connectable in the sector based on the priority. Alternatively, the user equipment 50 may determine the radio access network based on the priority.

Next, the access control device B24 registers the user equipment 50 to the home subscriber server 22 and executes a mutual authentication process between the user and the network and a registration process of the access control device B24 to the home subscriber server 22 (S110). The home subscriber server 22 acknowledges the registration of the access control device B24 and transmits a registration acknowledgement message including subscriber information such as authenticated service subscription information or billing information to the access control device B24 for a bearer established by the radio access network B40 (S111). The access control device B24 also transmits the registration acknowledgement message to the user equipment 50 (S1111). Simultaneously, the access control device B24 provides the external gateway device 21 with a bearer update request for requesting the establishment of a bearer to be used to update path information between the access control device B24 and the external gateway device 21 and transmit/receive communication data based on the identifier of the external gateway device 21 sent from the user equipment 50 (S 112).

In this embodiment, it has been described that the identifier of the external gateway device 21 is included in the attach request from the user equipment 50 of sequence S109. Alternatively, in the access control device B24, the identifier of the external gateway device 21 may be acquired by referring to subscriber information of the home subscriber server 22 based on the identifier of the user equipment 50 without including the identifier of the external gateway device 21 in the attach request, and the identifier of the external gateway device 21 may be acquired by other methods.

The external gateway device 21 receiving the bearer update request establishes a bearer between the access control device B24 and the external gateway device 21 and adds an initial policy, a billing rule, or the like to the established bearer (S 113), and sends a bearer update response (S114). Here, information transmitted in the bearer update response includes information for identifying at least the bearer. For example, when General Packet Radio Service Tunneling Protocol (GTP) is used as a protocol to implement the bearer between the access control device B24 and the external gateway device 21, a tunnel endpoint identifier (TEID) is included as information for identifying the above-described bearer. In this embodiment, it has been described that the initial policy or the billing rule is included in the bearer update request. Alternatively, the external gateway device 21 may acquire the above-described information from another network device.

The access control device B24 receiving the bearer update response of sequence S 114 secures a bearer resource between the user equipment 50 and the access control device B24 such as the radio resource allocation between the user equipment 50 and the base station device B41 of the radio access network B40 to the user equipment 50 via the base station device B41, the setup of a transmission path of the access control device B24 with the base station device B41, or the guarantee of QoS (S115). When a bearer between the user equipment 50 and the external gateway device 21 is established, the user equipment 50 sends an attach addition completion message to the base station device A32 (S116). The base station device A32 receiving the attach addition completion message transmits a bearer establishment completion message to the access control device A23 (S117). The access control device A23 receiving the bearer establishment completion message reads buffered communication data and starts to transmit the communication data to the access control device B24 via the external gateway device 21 (S 118). The attach completion message and the bearer establishment completion message include information for identifying communication data transmitted from the external gateway device 21 to at least the user equipment 50.

The external gateway device 21 transmits the communication data transmitted in sequence S118 to the user equipment 50 using the path information updated in sequence S 113 and the bearer between the user equipment 50 and the external gateway device 21 established in sequences S113 to S115 (S119, S120, and S121). Here, in this sequence example, a processing procedure in which a bearer between the access control device B24 and the user equipment 50 is established after a bearer between the access control device B24 and the external gateway device 21 is established has been shown. Alternatively, the other may be established even though one is not established and the establishment sequence may be different from the above. In this sequence example, a procedure in which the access control device A23 starts to transmit the attach addition completion message from the user equipment 50 as a trigger has been shown. Alternatively, the external gateway device 21 may start a transmission start request to the access control device A23 by checking that a bearer has been established in the radio access network B40, and another transmission start processing procedure may be used.

A sequence example regarding the reception of communication data from the packet data network 60 to the user equipment 50 when buffering is set to be performed by the access control device A23 in setting of the external gateway device 21 has been shown in FIG. 10. FIG. 11 shows a sequence example when buffering is set to be performed by its own device in setting of the external gateway device 21.
When communication data transmitted from the packet data network 60 to the user equipment 50 arrives at the external gateway device 21, the external gateway device 21 buffers the arrived communication data since the external gateway device 21 is set to buffer the communication data (S301). Like the access control device A23 of sequence 103 of FIG. 10, the external gateway device 21 determines a radio access network to be used which is the radio access network B40 based on preset information or transmitted subscriber information at the time of an attach operation (S302).

When the radio access network to be used is determined, the external gateway device 21 provides the access control device A23 with a paging request message including information for identifying the determined radio access network B40 to be used (S303). Here, the access control device B24 is provided with a buffer section in the communication control section 710. When a buffering device is changed from the external gateway device 21 to the access control device B24, path information between the external gateway device 21 and the access control device B24 is set here, not in sequences S312 to S314 to be described later. When General Packet Radio Service Tunneling Protocol (GTP) is used as a protocol to implement a bearer between the access control device B24 and the external gateway device 21, the paging request message of sequence S303 includes a tunnel endpoint identifier (TEID) for identifying the above-described bearer. When a communication protocol other than the above-described GTP is used, the paging request message of sequence S303 includes information for identifying at least the bearer corresponding to the TEID.

Upon receipt of the paging request message of sequence S303, the access control device A23 reports the paging request including the information for identifying the above-described radio access network B40 in a call signal via the base station devices B41 and B42 belonging to a corresponding paging area based on the paging area where the user equipment 50 is registered (S304 and S3041). Since subsequent sequences S305 to S311 are the same as sequences S105 to S 111 of FIG. 10, a detailed description thereof is omitted. Since an operation sequence when the radio access network A30 transmits communication data is the same as that of FIG. 10, a detailed description thereof is omitted.

In FIG. 11, path information between the external gateway device 21 and the access control device B24 is set in sequences S312 to S314. However, when the path information has already been set after the process of S303 as described above, only a process for adding an initial policy, a billing rule, or the like to the established bearer is executed without setting the path information. A subsequent process of S315 to S321 is the same as that of the operation sequence of FIG. 10 except that it is unnecessary to transmit communication data in S318 since the communication data is not transmitted to the access control device A23, and hence description thereof is omitted.

The paging request of sequences S1041 and S3041 causes the user equipment 50 to transition to the reception enabled state. Then, the user equipment 50 receiving the attach change request directed to the radio access network B40 of sequences S107 and S307 transmits the attach request of the radio access network B40 to the base station device B41. A bearer to the external gateway device 21 via the radio access network B40 is set up. Thus, communication data from the packet data network 60 accumulated by the access control device A23 or the external gateway device 21 is able to be transmitted to the user equipment 50 by the setup bearer, that is, the radio communication type B having no paging function.

In this embodiment, when the external gateway device 21 has received communication data from the packet data network 60, the sequence example shown in FIG. 10 in which the access control device A23 accumulates the communication data in the buffer section 613 and the available RAN determination section 631 determines the transmission path and the sequence example shown in FIG. 11 in which the external gateway device 21 accumulates the communication data in the buffer section 813 and the available RAN determination section 832 determines the transmission path have been shown, but only one of the two sequence examples may be executed. That is, the external gateway device 21 may execute the sequence example shown in FIG. 10 without the buffer section 813 and the available RAN determination section 832, and the access control device A23 may execute the sequence example shown in FIG. 11 without the buffer section 613 and the available RAN determination section 631.

In the sequence examples of FIGS. 10 and 11, when the transmission of communication data to the user equipment 50 via the radio access network B40 is started, the access control device A23 of the radio access network A30 may change a network device to buffer communication data to the external gateway device 21 or the access control device B24 of the radio access network B40, or may not directly make a change. When the buffering network device has been changed, the communication data may be transmitted from the external gateway device 21 to the access control device B24 without involving the access control device A23.

### [Second Embodiment]

In the first embodiment, the base station device A32 transmits the attach change request after the base station device A32 transmits the paging request in sequences S1041 and S3041 and the user equipment 50 receiving the paging request transitions to the reception enabled state. The second embodiment of the present invention is different from the first embodiment in that a base station device A132 transmits the paging request including the attach change request.
The mobile communication system in this embodiment is different from the mobile communication system 10 shown in FIG. 1 in that the access control device A23 of the core network 20, the base station devices A31 to 32 of the radio access network A30, and the user equipment 50 correspond to an access control device 123 of a core network 120, a radio access network A130, base station devices A131 to 132, and user equipment 150.

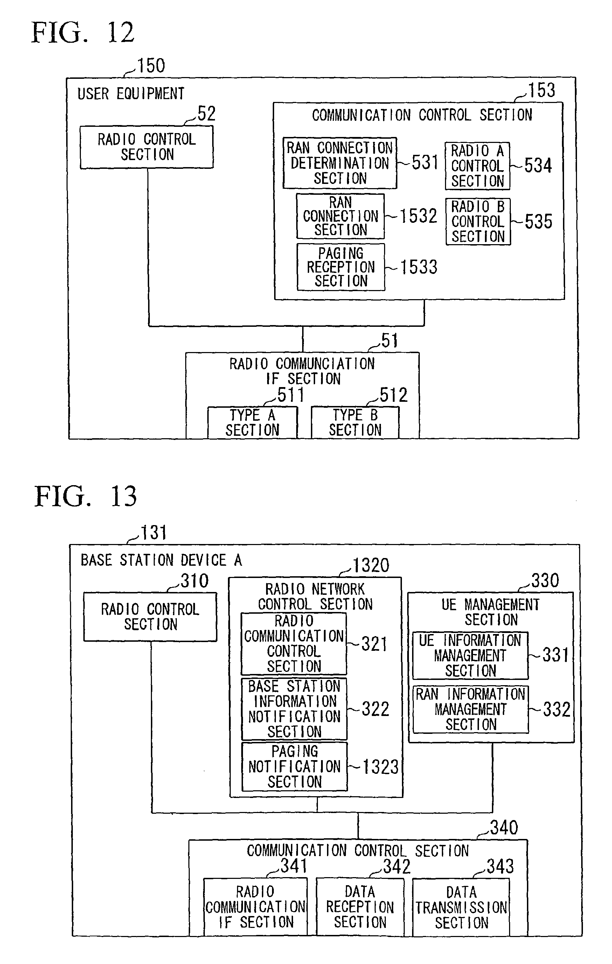

FIG. 12 is a schematic block diagram showing the configuration of the user equipment 150 according to this embodiment. In the same figure, the same reference numerals are assigned to the sections (51, 511, 512, 52, 531, 534, and 535) corresponding to those of FIG. 2, and hence description thereof is omitted. As shown in FIG. 12, the user equipment 150 includes a radio communication IF section 51, a radio control section 52, and a communication control section 153. The communication control section 153 includes a RAN connection determination section 531, a RAN connection section 1532, a paging reception section 1533, a radio A control section 534, and a radio B control section 535.

The paging reception section (first radio communication type communication section) 1533 executes a paging process to cause the user equipment 50 to transition to the reception enabled state when a packet for the user equipment 50 from the packet data network 60 reaches the mobile communication system 10 while the user equipment 50 is in the idle state, but executes a process to cause the radio A control section 534 to transition to the reception enabled state by receiving a paging request transmitted by the paging process. In this embodiment, since the paging request includes an attach change request directed to the radio access network B40, the paging reception section 1533 extracts the attach change request from the paging request and outputs the extracted attach change request to the RAN connection section 1532. When the attach change request including an identifier designating the radio access network A30 or B40 has been received from the paging reception section 1533, the RAN connection section (second radio communication type connection section) 1532 analyzes the identifier, executes a transmission process of an attach request to be registered or connected to a corresponding radio access network, and causes the radio A control section 534 or the radio B control section 535 to transition to the reception enabled state.

FIG. 13 is a schematic block diagram showing the configuration of a base station device A (first base station section) 131. Base station devices A131 to A132 provided in the radio access network A130 have the same configuration as the base station device A131. In the same figure, the same reference numerals are assigned to the sections (310, 321, 322, 330, 331, 332, 340, 341, 342, and 343) corresponding to those of FIG. 3, and hence description thereof is omitted.

As shown in FIG. 13, the base station device A131 includes a radio control section 310, a radio network control section 1320, a UE management section 330, and a communication control section 340. The radio network control section 1320 includes a radio communication control section 321, a base station information notification section 322, and a paging notification section 1323. Upon receipt of a transmission instruction of a paging request including an attach change request from the access control device A123 to the radio access network B40, the paging notification section 1323 transmits the paging request according to the transmission instruction.

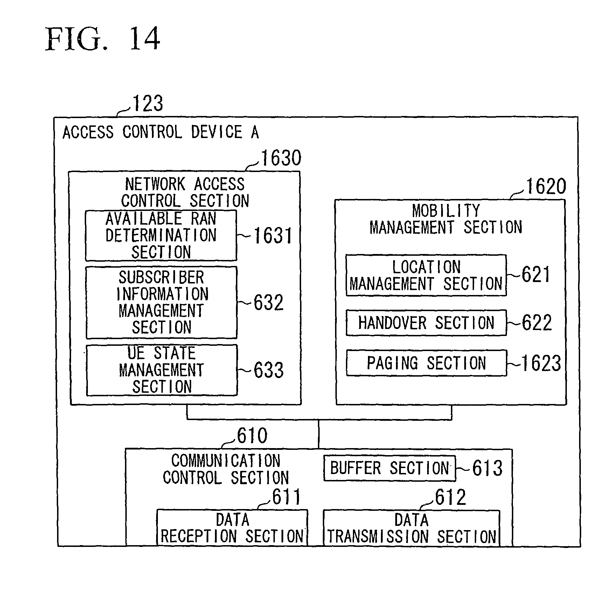

FIG. 14 is a schematic block diagram showing the configuration of the access control device A123. In the same figure, the same reference numerals are assigned to the sections (610, 611, 612, 613, 621, 622, 632, and 633) corresponding to those of FIG. 5, and hence description thereof is omitted. As shown in FIG. 14, the access control device A123 includes a communication control section 610, a mobility management section 1620, and a network access control section 1630.

The network access control section 1630 includes an available RAN determination section 1631, a subscriber information management section 632, and a UE state management section 633. Upon receipt of communication data of which a transmission route is not defined from the external gateway device 21, the available RAN determination section 1631 determines the transmission route of the communication data (a radio access network to be used), and instructs a paging section 1623 to transmit the paging request including the attach change request directed to the radio access network B40 when the determined transmission route uses the radio access network B40.

The mobility management section 1620 includes a location management section 621, a handover section 622, and the paging section 1623. When an incoming call directed to the user equipment 150 exists, the paging section 1623 causes the base station devices A131 and A132, connected within a paging area where the user equipment 150 is registered, to transmit the paging request including the attach change request as the paging request calling the user equipment 150 according to an instruction received from the available RAN determination section 1631.

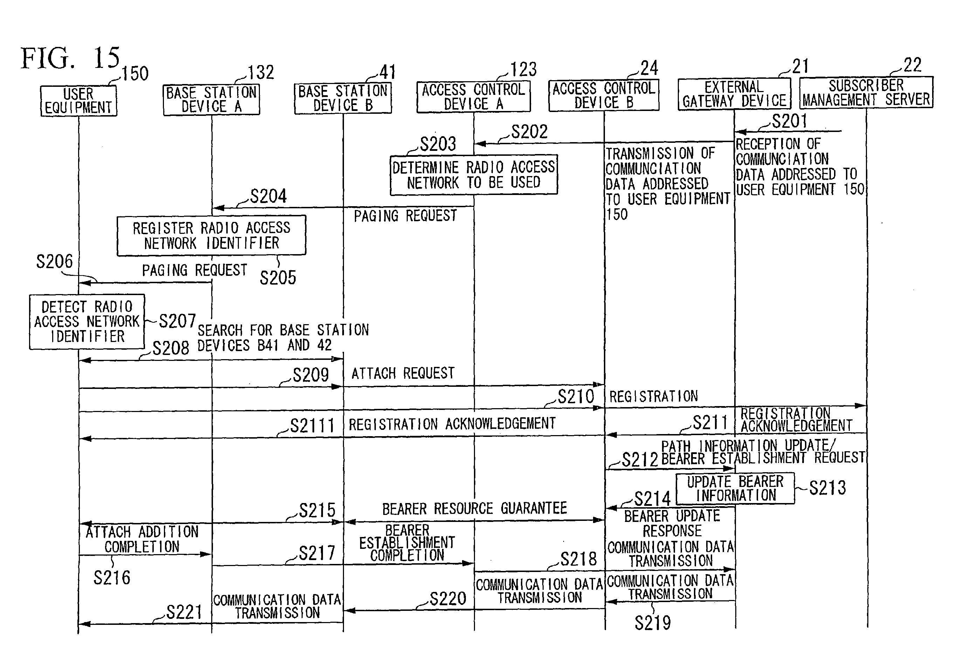

FIG. 15 is a diagram showing a sequence example of transmitting communication data via the radio access network B40 by registering the user equipment 150 to the radio access network B40 using a paging function of the radio access network A130. In this sequence example, the access control device A123 having the paging function is connected to the radio access network A130, and the access control device B24 connected to the radio access network B40 does not have the paging function.

Since the process of sequences S201 to S205 is the same as that of sequences S101 to S105 when the paging function of the radio access network A30 of FIG. 10 is used, a detailed description thereof is omitted. Each of the base station devices A131 and 132 receiving the paging request message including an identifier of the radio access network B40 from the access control device A123 reports information like an identifier of an access point necessary for a connection to the radio access network B40 and the paging request including an identifier of the user equipment 150 (S206).

Here, in this sequence example, a radio frequency, a bandwidth, and an identifier of an access point to be used by the radio access network B40 are used as information necessary for a connection to the radio access network B40. When the radio access network B40 is a radio LAN, the necessary information includes a list of radio frequencies to be used by the radio LAN, an SSID as an identifier of a radio access point, an authentication key, or the like. The side of the user equipment 150 and the sides of the base stations A131 to 132 may hold information for a connection to each radio access network and a radio access network to which the user equipment 150 is connectable as management information by referring in advance to the user's subscriber information or retention function information as information for a connection to the radio access network B40 included in the paging request message, and may send an identifier such as an index number for identifying the information.

Upon receipt of the paging request message of sequence S206, the user equipment 150 extracts the information for the connection to the radio access network B40 (S207) and searches for the base station devices B41 and 42 based on the above-described information for the connection to the radio access system B40 (S208). When the base station device B41 of the connectable radio access network B40 is discovered (part of S208), the user equipment 150 transmits an attach request including an information element of a UE identifier, an attach type, or the like, to the above-described base station device B41 (S209).

When a plurality of base station devices B of the radio access network B40 has been discovered, the user equipment 150 may determine a base station device B to be connected by radio quality information such as the radio wave strength, the number of user equipments connected to the base station device B, or the congestion situation of a communication load (part of S208). When no connectable base station B has been discovered in the process of sequence S208, a paging process as in the past is executed by transmitting a paging response message to the base station device A132 and a process is executed to receive communication data via the radio access network A130.
Since the process of sequences S210 to S221 is the same as that of sequences S110 to S121 when the paging function of the radio access network A130 of FIG. 10 is used, a detailed description thereof is omitted.

The paging request of sequence S206 causes the user equipment 150 to transition to the reception enabled state. Next, the user equipment 150 receiving the attach change request directed to the radio access network B40 of sequence S207 transmits the attach request of the radio access network B40 to the base station device B41. A bearer to the external gateway device 21 via the radio access network B40 is set up. Thus, communication data from the packet data network 60 accumulated by the access control device A23 or the external gateway device 21 is able to be transmitted to the user equipment 150 by the setup bearer, that is, the radio communication type B having no paging function.

### [Third Embodiment]

Hereinafter, the third embodiment of the present invention will be described with reference to the drawings. In the first and second embodiments, when a radio access network to be used does not have a paging function, the radio access network to be used is set to the communication enabled state by performing a paging request using a radio access network having the paging function. However, in this embodiment, an example when the radio access network to be used has the paging function will be described.

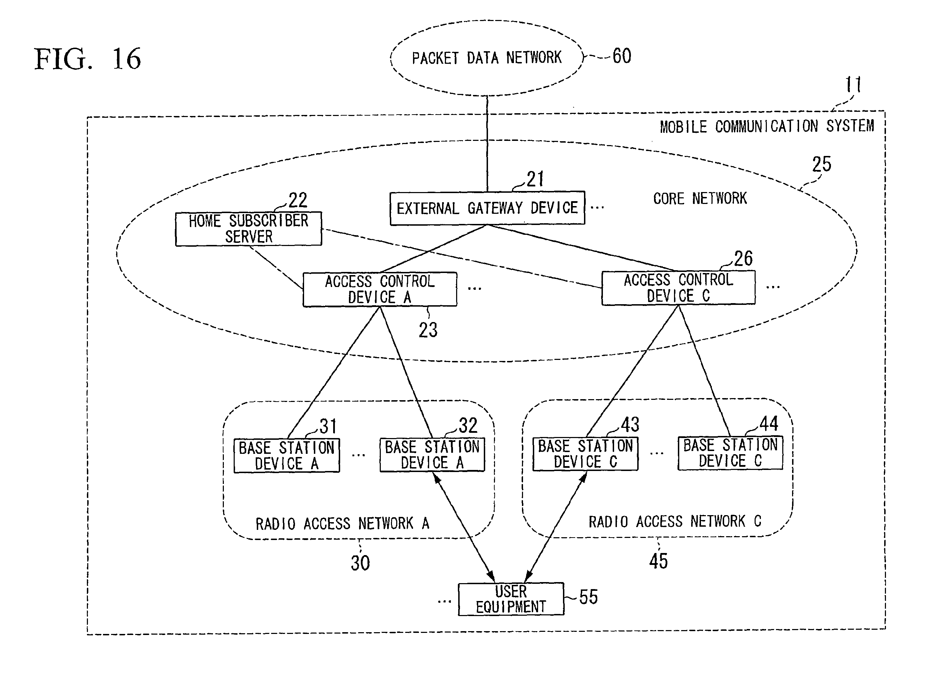

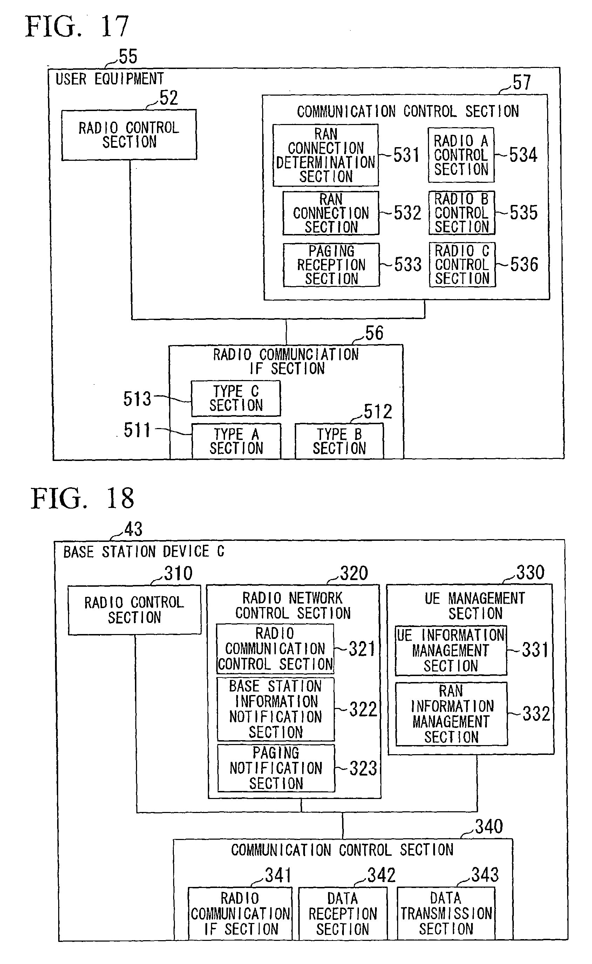

FIG. 16 is a schematic block diagram showing the network configuration of a mobile communication system 11. In the same figure, the same reference numerals are assigned to the sections (21, 22, 23, 30, 31, 32, and 60) corresponding to those of FIG. 1, and hence description thereof is omitted. The mobile communication system 11 includes a core network 25, a radio access network A30 communicating in the radio communication type A having the paging function, a radio access network C45 communicating in a radio communication type C having the same paging function, and user equipment 55. The user equipment 55 will be described with reference to FIG. 17. Although not shown in FIG. 16, the mobile communication system 11 has the radio access network B40 having no paging function and the access control device B24.

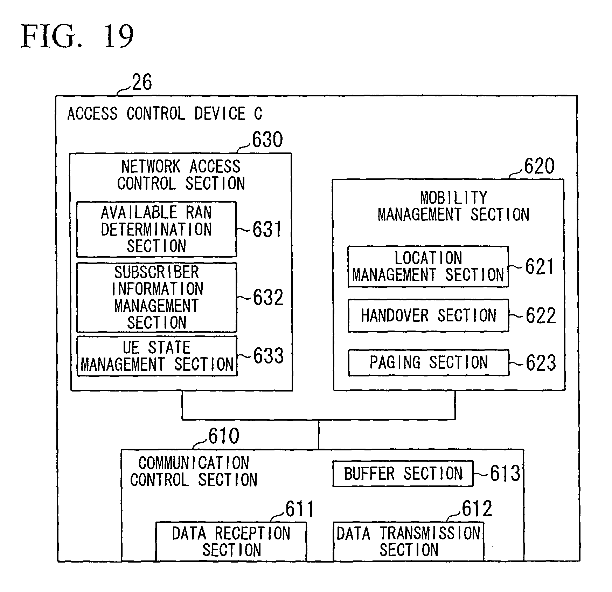

The core network 25 includes the external gateway device 21, the home subscriber server 22, the access control device A23, and an access control device C26. The access control device C26 will be described with reference to FIG. 19. The radio access network C45 includes a plurality of base station devices C43 to 44. The radio access networks A30 and C45 respectively include two base station devices, but this is illustrative. The number of base station devices is not limited thereto.
In this embodiment, the access control devices A23 and C26 function as the gateway device of the radio access network A30, the radio access network C45, and the core network 25, and the external gateway device 21 functions as the gateway device of the packet data network 60 and the mobile communication system 11.

FIG. 17 is a schematic block diagram showing the configuration of the user equipment 55 according to this embodiment.
In the same figure, the same reference numerals are assigned to the sections (52, 511, 512, 531, 532, 533, 534, and 535) corresponding to those of FIG. 2, and hence description thereof is omitted. The user equipment 55 includes a radio control section 52, a radio communication IF section 56, and a communication control section 57. The radio communication IF section 56 includes a type A section 511, a type B section 512, and a type C section 513. The communication control section 57 includes a RAN connection determination section 531, a RAN connection section 532, a paging reception section 533, a radio A control section 534, a radio B control section 535, and a radio C control section 536. The type C section 513 performs communication among the user equipment 55, the base station devices C43 to C44 within the radio access network C45, and the access control device C26 via a radio connection. In the reception enabled state, the radio C control section 536 transmits/receives communication data via the type C section 513. The paging reception section 533 receives the paging request of the radio communication type C in the idle state, causes the communication state of the radio communication type C to transition to the reception enabled state, and returns a paging response.

FIG. 18 is a schematic block diagram showing the configuration of the base station device C43 according to this embodiment.
In the same figure, the same reference numerals are assigned to the sections (310, 320, 330, and 340) corresponding to those of FIG. 3, and hence description thereof is omitted. As shown in FIG. 18, the base station device C43 has the same configuration as the base station device A31, but they are only different in that the radio communication IF section 341 communicates the user equipment 55 using the radio communication type C.
FIG. 19 is a schematic block diagram showing the configuration of the access control device C26 according to this embodiment. In the same figure, the same reference numerals are assigned to the sections (610, 620, and 630) corresponding to those of FIG. 5, and hence description thereof is omitted. As shown in FIG. 19, the access control device C26 has the same configuration as the access control device A23.

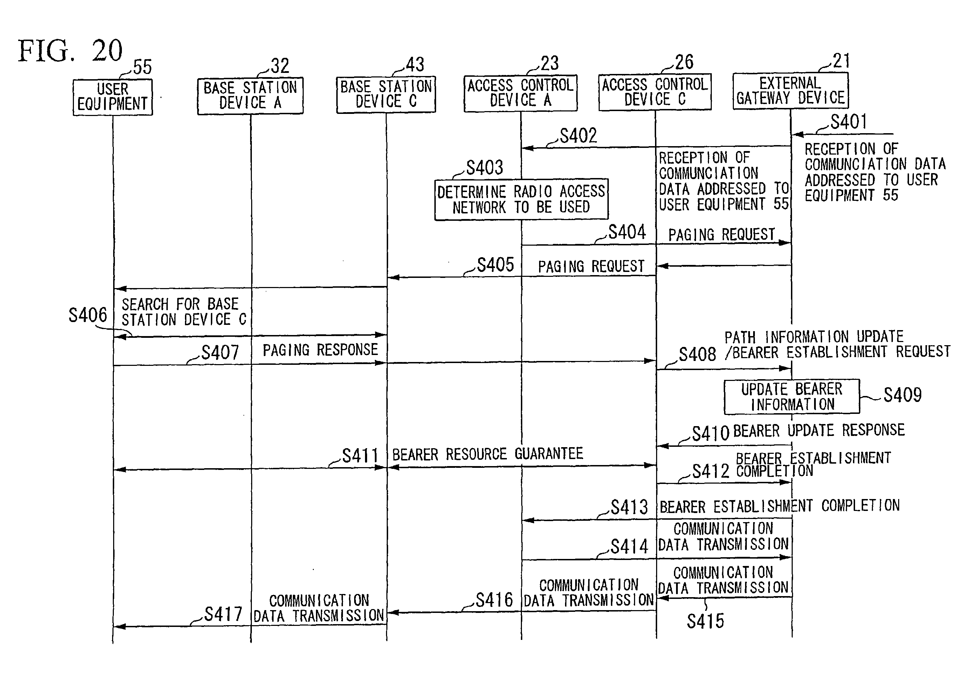

Next, FIG. 20 is a diagram showing a sequence example when communication data for the user equipment 55 received from the packet data network 60 is buffered by the access control device A23 and is transmitted to the user equipment 55 via the radio access network C45. In the sequence example of FIG. 20, when a radio access network to which the user equipment 55 is registered is different from a radio access network determined for use in the transmission of communication data, a paging process of the radio access network C45 determined for use is executed for the user equipment 55 of the idle state and communication data transmitted from the packet data network 60 is transmitted by causing the user equipment 55 to transition to the reception enabled state.

In this sequence example, it is assumed that both of the radio access network A30 and the radio access network C45 have the paging function and have completed the registration process. In this sequence example, a buffering process is preset to be executed by the access control device A23 connected to the radio access network A30, and the access control device A23 determines whether to use the radio access network C45. Since the access control device C26 connected to the radio access network C45 has the paging function, a paging request message is transmitted from the access control device A23 to the access control device C26 and communication data is transmitted by causing the user equipment 55 to transition from the idle state to the reception enabled state using the paging function of the access control device C26 arranged in the radio access network C45.

When communication data transmitted from the packet data network 60 arrives at the external gateway device 21 (S401), the arrived communication data is transmitted to the access control device A23 since the access control device A23 is set to perform the buffering process in the external gateway device 21 (S402). The access control device A23 determines a radio access network to be used which is the radio access network C45 by referring to service subscriber information managed by the network access control section 630 and referring to the user's subscriber information, location information of the user equipment 55, or communication data transmitted to the user equipment 55 (S403).

When the radio access network to be used is determined since the radio access network C45 has the paging function in this sequence example, the access control device A23 transmits a paging request including information for identifying the above-described radio access network C45 to the external gateway device 21 (S404). Here, the access control device A23 includes and transmits an identifier of the access control device C26 connected to a paging area of the radio access network C45 where the user equipment 55 is registered in the paging request. In this sequence example, the user equipment 55 is registered to the access control device C26. When information of the base station device C43 of the radio access network C45 where the user equipment 55 is registered is not provided, information for identifying at least the user equipment 55 is included and transmitted in the paging request.

The external gateway device 21 determines the access control device C26 to which the user equipment 55 is registered from the received paging request to transmit the paging request to the access control device C26, and the access control device C26 reports a paging request message via the base station device C43 belonging to a corresponding paging area based on the paging area where the user equipment 55 is registered by referring to location information of the user equipment 55 managed by the mobility management section 620 (S405). When information specifying the access control device C26 is not included in the paging request message of sequence S404 transmitted from the access control device A23, the access control device C26 may be specified by referring to an identifier of the user equipment 55 and referring to path information between the external gateway device 21 and the access control device C26 established upon registration of the user equipment 55.

The user equipment 55 receiving the paging request searches for the base station device C of the connectable radio access network C45 (S406), and transmits a paging response message to the base station device C43 when the connectable base station device C43 is discovered (S407). The base station device C43 receiving the paging response message transmits a paging response including information necessary for a connection between the base station device C43 and the access control device C26 such as its own base station identifier or the like. Upon receipt of the paging response message, the access control device C26 transmits a path information update/bearer establishment request message to the external gateway device 21 by referring to subscriber information managed by the access control device C26 and including subscriber information like service subscription information or billing information (S408).

Upon receipt of the path information update/bearer establishment request message, the external gateway device 21 updates bearer information to add a QoS policy, a billing rule, or the like for the bearer established between the user equipment 55 and the external gateway device 21 (S409). In this sequence example, the QoS policy or the billing rule is included in the path information update/bearer establishment request message, but the above-described information may be acquired from another network device and acquisition means thereof is no object. When the external gateway device 21 completes the bearer information update, the external gateway device 21 returns a bearer update response message to the access control device C26 (S410). Upon receipt of the bearer update response message, the access control device C26 secures a bearer between the user equipment 55 and the base station device C43 and between the base station device C43 and the access control device C26 in cooperation with another device (S411).

When the bearer between the user equipment 55 and the access control device C26 is secured, the access control device C26 transmits a bearer establishment completion message to the external gateway device 21 (S412). The external gateway device 21 transmits the bearer establishment completion message to the access control device A23 (S413). Once communication data buffered by the access control device A23 is sent to the external gateway device 21 (S414), the communication data is sent to the user equipment 55 via the bearer established in sequences S408 to S411 (S415, S416, and S417).

Here, in this sequence example, a processing procedure in which bearer information between the access control device C26 and the external gateway device 21 is updated after establishing a bearer between the access control device C26 and the external gateway device 21 has been shown. Alternatively, the other process may be executed even though one process is not completed. A processing sequence regarding the bearer setup is no object. In this sequence example, a procedure of starting the transmission to the access control device C26 using the bearer establishment completion message (S412 and S413) from the access control device C26 as a trigger has been shown. Alternatively, the transmission process to the user equipment 55 may be started in the step in which the external gateway device 21 has completed the requested bearer setup process. The transmission start processing procedure is not limited.

In the first and second embodiments, the case where the user equipments 50 and 150 are communicable in two radio communication types has been described. It is possible to implement the same even when communication is possible in radio communication types whose number exceeds 2.
Information included in a paging request or a device which manages such information may be different by a radio access network or a radio communication type. As long as a function of executing a process described in the above-described first and second embodiments is provided, it is not limited to the system configuration shown in the above-described first and second embodiments. For example, a base station device and an access control device may be implemented by one device.

The radio communication IF section 51, the radio control section 52, and the communication control section 53 of FIG. 2; the radio control section 310, the radio network control section 320, the UE management section 330, and the communication control section 340 of FIG. 3; the radio control section 410, the radio network control section 420, the UE management section 330, and the communication control section 440 of FIG. 4; the communication control section 610, the mobility management section 620, and the network access control section 630 of FIG. 5; the communication control section 710, the mobility management section 720, and the network access control section 630 of FIG. 7; the data reception section 810, the data transmission section 820, and the RAN management section 830 of FIG. 8; the service subscriber information management section 901, the user identification information management section 902, and the user location information management section 903 of FIG. 9; the radio communication IF section 51, the radio control section 52, and the communication control section 153 of FIG. 12; the radio control section 310, the radio network control section 1320, the UE management section 330, and the communication control section 340 of FIG. 13; the communication control section 610, the mobility management section 1620, and the network access control section 1630 of FIG. 14; the radio control section 52, the radio communication IF section 56, and the communication control section 57 of FIG. 17; the radio control section 310, the radio network control section 320, the UE management section 330, and the communication control section 340 of FIG. 18; and the communication control section 610, the mobility management section 620, and the network access control section 630 of FIG. 19 may be implemented by dedicated hardware. Each of these sections may include a memory and a CPU (Central Processing Unit), and the function thereof may be implemented by loading a program for implementing the function of each section to the memory and executing the program.

A computer-readable recording medium may record a program for implementing functions of the radio communication IF section 51, the radio control section 52, and the communication control section 53 of FIG. 2; the radio control section 310, the radio network control section 320, the UE management section 330, and the communication control section 340 of FIG. 3; the radio control section 410, the radio network control section 420, the UE management section 330, and the communication control section 440 of FIG. 4; the communication control section 610, the mobility management section 620, and the network access control section 630 of FIG. 5; the communication control section 710, the mobility management section 720, and the network access control section 630 of FIG. 7; the data reception section 810, the data transmission section 820, and the RAN management section 830 of FIG. 8; the service subscriber information management section 901, the user identification information management section 902, and the user location information management section 903 of FIG. 9; the radio communication IF section 51, the radio control section 52, and the communication control section 153 of FIG. 12; the radio control section 310, the radio network control section 1320, the UE management section 330, and the communication control section 340 of FIG. 13; the communication control section 610, the mobility management section 1620, and the network access control section 1630 of FIG. 14; the radio control section 52, the radio communication IF section 56, and the communication control section 57 of FIG. 17; the radio control section 310, the radio network control section 320, the UE management section 330, and the communication control section 340 of FIG. 18; and the communication control section 610, the mobility management section 620, and the network access control section 630 of FIG. 19. A computer system may read and execute the program recorded to the recording medium to execute the process of each section. Here, the "computer system" includes an OS and hardware such as peripheral devices.

The "computer readable recording medium" is a portable medium such as a flexible disc, a magneto-optical disc, a ROM and a CD-ROM, and a storage device, such as a hard disk, built in the computer system. Furthermore, the "computer readable recording medium" may also include a medium that dynamically holds a program for a short period of time, such as a communication line when a program is transmitted via a network such as the Internet or a communication network such as a telephone network, and a medium that holds a program for a fixed period of time, such as a volatile memory in a computer system serving as a server or client in the above situation. The program may be that for implementing part of the above functions, or the above functions may be implemented in combination with a program already recorded to the computer system.

The embodiments of the present invention have been described in detail with reference to the drawings. However, a specific configuration is not limited to the embodiments and may include any design in the scope of the claims without departing from the subject matter of the present invention.

### Industrial applicability

The present invention is useful for a mobile communication network having a plurality of radio communication types, but is not limited thereto.

## Claims

1. A mobile communication system having at least one user equipment communicating using a plurality of radio communication types including one or more radio communication types having a paging function of causing a communication state of a corresponding radio communication type to transition from an idle state to a reception enabled state when a paging request is received, at least one core network communicating with an external network, and at least one radio access network communicating with the user equipment using a corresponding radio communication type in each of the plurality of radio communication types, the mobile communication system comprising:
the core network including:
an external network reception section which receives data transmitted from the external network to the user equipment;
a connection instruction processing section which causes a first radio access network communicating using a first radio communication type to transmit a paging request directed to the user equipment using the first radio communication type having the paging function as one of the plurality of radio communication types and a connection instruction of a second radio communication type other than the first radio communication type as one of the plurality of radio communication types when the external network reception section receives the data;
a connection management section which registers a connection by the second radio communication type with the user equipment when a second radio access network communicating using the second radio communication type receives a connection request from the user equipment; and
a transmission section which causes the second radio access network to transmit the data when the connection management section registers the connection by the second radio communication type with the user equipment; and
the user equipment including:
a first radio communication type communication section which receives the paging request to cause a communication state of the first radio communication type to transition to the reception enabled state and receives the connection instruction;
a second radio communication type connection section which transmits the connection request using the second radio communication type designated by the connection instruction according to the received connection instruction and causes a communication state of the second communication type to transition to the reception enabled state; and
a second radio communication type communication section which receives the data using the second radio communication type when the communication state of the second communication type is the reception enabled state.

2. The mobile communication system according to Claim 1, **characterized in that:**
the core network includes a buffer section which stores the received data,
the external network reception section of the core network stores the received data in the buffer section, and
the transmission section of the core network causes the second radio access network to transmit the data read from the buffer section when the connection by the second radio communication type with the user equipment is registered to the connection management section.

3. The mobile communication system according to Claim 1, **characterized in that:**
the core network includes:
an external gateway device connected to the external network;
a first access control device connected to the first radio access network; and
a second access control device connected to the second radio access network,
the external network reception section is included in the external gateway device,
the connection instruction processing section is included in the external gateway device or the first access control device,
the transmission section is included in the second access control device, and
the connection management section is included in the second access control device and the external gateway device.

4. The mobile communication system according to Claim 1, **characterized in that:**
the core network includes a selection processing section which selects a radio communication type in which the data is transmitted to the user equipment, and
the connection instruction processing section of the core network causes the first radio access network to transmit the paging request directed to the user equipment and also transmit the connection instruction directed to the user equipment when a selection result of the selection processing section is the second radio communication type.

5. The mobile communication system according to Claim 1, **characterized in that:**
the connection instruction processing section of the core network causes the first radio access network to transmit the paging request directed to the user equipment when the external network reception section receives the data, and causes the first radio access network to transmit the connection instruction of the second radio communication type when the first radio access network receives a response of the paging request, and
the first radio communication type communication section of the user equipment receives the paging request, transmits the response using the first radio communication type when the paging request is received, makes the transition to the reception enabled state, and receives the connection instruction of the second radio communication type.

6. The mobile communication system according to Claim 1, **characterized in that:**
the connection instruction processing section of the core network causes the first radio access network to transmit the paging request directed to the user equipment including the connection instruction of the second radio communication type when the external network reception section receives the data, and
the first radio communication type communication section of the user equipment receives the paging request, extracts the connection instruction of the second radio communication type from the paging request, and makes the transition to the reception enabled state.

7. The mobile communication system according to Claim 1, **characterized in that:**
the connection instruction processing section selects a radio communication type in which the received data is transmitted to the user equipment, and causes a third radio access network communicating using a third radio communication type to transmit a paging request when the selected radio communication type is the third radio communication type having the paging function as one of the plurality of radio communication types excluding the first radio communication type, and
the transmission section causes the third radio access network to transmit the data when a paging response of the third radio communication type is received.

8. A radio communication method in a mobile communication system having at least one user equipment communicating using a plurality of radio communication types including one or more radio communication types having a paging function of causing a communication state of a corresponding radio communication type to transition from an idle state to a reception enabled state when a paging request is received, at least one core network communicating with an external network, and at least one radio access network communicating with the user equipment using a corresponding radio communication type in each of the plurality of radio communication types, the radio communication method comprising:
a first step in which the core network receives data transmitted from the external network to the user equipment;
a second step in which the core network causes a first radio access network communicating using a first radio communication type to transmit a paging request directed to the user equipment using the first radio communication type having the paging function as one of the plurality of radio communication types and a connection instruction of a second radio communication type other than the first radio communication type as one of the plurality of radio communication types when the external network reception section receives the data;
a third step in which the user equipment receives the paging request to cause a communication state of the first radio communication type to transition to the reception enabled state and receives the connection instruction;
a fourth step in which the user equipment transmits the connection request using the second radio communication type designated by the connection instruction according to the received connection instruction and causes a communication state of the second communication type to transition to the reception enabled state;
a fifth step in which the core network registers a connection by the second radio communication type with the user equipment when a second radio access network communicating using the second radio communication type receives a connection request from the user equipment;
a sixth step in which the core network causes the second radio access network to transmit the data when the connection by the second radio communication type with the user equipment is registered in the fifth step; and
a seventh step in which the user equipment receives the data using the second radio communication type when the communication state of the second communication type is the reception enabled state.

9. A core network communicating with user equipment via a radio access network corresponding to each of a plurality of radio communication types including one or more radio communication types having a paging function of causing a communication state of a corresponding radio communication type to transition to a reception enabled state when the user equipment of an idle state receives a paging request and further communicating with an external network, the core network comprising:
an external network reception section which receives data transmitted from the external network to the user equipment;
a connection instruction processing section which causes a first radio access network communicating using a first radio communication type to transmit a paging request directed to the user equipment using the first radio communication type having the paging function as one of the plurality of radio communication types and a connection instruction of a second radio communication type other than the first radio communication type as one of the plurality of radio communication types when the external network reception section receives the data;
a connection management section which registers a connection by the second radio communication type with the user equipment when a second radio access network communicating using the second radio communication type receives a connection request from the user equipment; and
a transmission section which causes the second radio access network to transmit the data when the connection management section registers the connection by the second radio communication type with the user equipment.

10. User equipment communicating using a plurality of radio communication types including one or more radio communication types having a paging function of causing a communication state of a corresponding radio communication type to transition from an idle state to a reception enabled state when a paging request is received, the user equipment comprising:
a first radio communication type communication section which receives the paging request to cause a communication state of the first radio communication type to transition to the reception enabled state and receives the connection instruction;
a second radio communication type connection section which transmits the connection request using the second radio communication type designated by the connection instruction according to the received connection instruction and causes a communication state of the second communication type to transition to the reception enabled state; and
a second radio communication type communication section which receives the data using the second radio communication type when the communication state of the second communication type is the reception enabled state.

11. A program for causing a computer of a core network communicating with user equipment via a radio access network corresponding to each of a plurality of radio communication types including one or more radio communication types having a paging function of causing a communication state of a corresponding radio communication type to transition to a reception enabled state when the user equipment in an idle state receives a paging request and further communicating with an external network, to function as:
an external network reception section which receives data transmitted from the external network to the user equipment;
a connection instruction processing section which causes a first radio access network communicating using a first radio communication type to transmit a paging request directed to the user equipment using the first radio communication type having the paging function as one of the plurality of radio communication types and a connection instruction of a second radio communication type other than the first radio communication type as one of the plurality of radio communication types when the external network reception section receives the data;
a connection management section which registers a connection by the second radio communication type with the user equipment when a second radio access network communicating using the second radio communication type receives a connection request from the user equipment; and
a transmission section which causes the second radio access network to transmit the data when the connection management section registers the connection by the second radio communication type with the user equipment.

12. A program for causing a computer of user equipment communicating using a plurality of radio communication types including one or more radio communication types having a paging function of causing a communication state of a corresponding radio communication type to transition from an idle state to a reception enabled state when a paging request is received, to function as:
a first radio communication type communication section which receives the paging request to cause a communication state of the first radio communication type to transition to the reception enabled state and receives the connection instruction;
a second radio communication type connection section which transmits the connection request using the second radio communication type designated by the connection instruction according to the received connection instruction and causes a communication state of the second communication type to transition to the reception enabled state; and
a second radio communication type communication section which receives the data using the second radio communication type when the communication state of the second communication type is the reception enabled state.
